# EUROPEAN PATENT APPLICATION

(11) **EP 2 607 500 A1**
(43) Date of publication of application: **26.06.2013**
(21) Application number: 11306775.5
(22) Date of filing: 23.12.2011
(51) Int. Cl.: C14C 3/08, C08L 3/10

(54) **Leather manufacturing process using a soluble oxidized starch-derived polysaccharide and compositions containing it**

(71) Applicant: HERMES SELLIER, 75008 Paris (FR)
(72) Inventor: Alberto Elvio, 10080 Ozegna (TO) (IT); Baralis Amadeo, 10143 Torino (TO) (IT); Baralis Massimo, 10090 Villarbasse (TO) (IT); Ioannidis Ioannis, 175 63 Palaio Faliro Athenes (GR)
(74) Representative: Ulmann, Catherine Claire

(57) **Abstract**

The invention relates to a leather manufacturing process comprising the use of a soluble oxidized starch-derived polysaccharide in all chemical operations employed during leather manufacture, in particular as tanning and/or retanning and/or dry finishing agent(s), as well as to the soluble oxidized starch-derived polysaccharide, to compositions containing it and to a process for obtaining it.

## Description

The invention relates to a leather manufacturing process comprising the use of a soluble oxidized starch-derived polysaccharide in all chemical operations employed during leather manufacture, in particular as tanning and/or retanning and/or dry finishing agent(s), as well as to the soluble oxidized starch-derived polysaccharide, hereafter referred to as "SDAS", to compositions containing it and to a process for obtaining it.

According to the invention, the soluble oxidized starch-derived polysaccharide can be used, in particular, in the pre-tanning, tanning, retanning, as well as dry-finishing operations of animal origin pelts and tailored wet-stabilised leathers of small and large dimensions. Meanwhile, metal salts, potentially toxic and high concern substances for health and safety of the consumer are concomitantly eliminated, and inorganic chemicals and commercial organic state-of-the-art tanning and finishing agents are drastically replaced.

By "soluble", it is understood that the oxidized starch-derived polysaccharide is able to mix readily in water at any possible weight ratio, resulting in a single phase solution.

Leather has been recognised for thousands of years as the premier material for footwear, garments, accessories upholstery and decorating house and furniture. This relies on its strength, working characteristics, durability, ready availability, ability to be decorated using a wide range of techniques and above all its unique aesthetic appeal to both the eye and the touch.

Although the leather industry is environmentally important as a user of the by-product of the meat industry, it is also perceived as a consumer of resources and a producer of pollutants. In order to reach the status of future sustainability, the industry must, therefore, aim at reducing the consumption of chemicals, water and energy resources and at minimising the production of inorganic and organic waste. In the latter case, the dermal waste is potentially a useful resource that can be converted from waste with high negative value i.e., represents a cost of disposal, to by-products with added value. Furthermore, the proteinaceous waste can be processed into new products, particularly for the biomedical sector, that will have high added value.

Concomitantly, at a world wide scale there is an essential drive towards improving leather quality within a framework of eco-friendly production. Legislative boundaries have been set, defined by policies and underpinned by actions such as IPPC Directive (EC 1996/61/EC), the Water Framework Directive (COM(1999) 271), and the directives that govern the production and use of "harmful" or toxic substances (CLP Dir. 1272/2008) and the registration, evaluation and authorisation of chemicals (Dir. REACh).

Annually, the European leather industry consumes about 2 million tons of animal hides and skins, the by-product of the meat industry. This raw material is converted into approximately 317 million square meters of leather. The substrate for leather production is the collagen protein contained within the animal skin and can therefore be viewed as a primary resource. However, the process of converting the collagen into leather consumes other resources that will contribute to the environmental impact of leather manufacture, namely water, energy and chemicals.

Leather manufacture, namely the conversion of animal hides into leather, is a complex process involving several steps. Briefly, the leather making process comprises the beamhouse, tanning, crusting (wet-finishing) and finishing steps.

The tannery production cycle comprises a sequence of chemical and mechanical processes which transform a by-product of the meat-industry, (raw hides/skins), which is always susceptible to microbiological and pathogen attack when wet and when dry turn into a horn, into "tanned leather", that possesses superior hydrothermal stability, resistance to microbiological attack, shape retention, elasticity and plasticity controlled by the "tanning process" applied. The semi processed wet material thus obtained can be further processed to yield first dyed and fatliquored semi-finished leather ("crust leather") and then "finished leathers" that are fit for the production of articles such as footwear, leathergoods, apparel, etc.

There are four main stages in this cycle:
1) The beamhouse : this step comprises the cleaning chemical and mechanical operations to prepare the hides and skins for tanning. Salt, dung, blood, natural grease, sclero-proteins, glucosaminoglycans, hyaluronic acid and quite often hair and wool are eliminated. These are the most polluting steps of the process responsible for approximately 70% of total pollution loads generated. The product is called "pelt".
2) The tanning : this step comprises chemical and mechanical operations to ensure the stable reticulation of the fibres of the dermal collagen (the principal connective tissue protein). This step often involves several preparatory steps to be applied on pelts such as pickling, conditioning, partial stabilisation (pre-tanning), depending upon the tanning chemistry as well as sorting practices employed at the tannery .
3) The wet-finishing or crusting : this step comprises chemical operations to improve the aesthetic and commercial properties of the semi-processed tanned leathers; these operations can be broadly itemized as follows:
   3.1) Retanning: this step gives the hides a full consistency, thanks to the use of tannins and resins of various kinds, especially acrylic;
   3.2) Dyeing in the strict sense: this step gives the desired colour;
      the dye is added in a concentrated solution after having been heat-dissolved; the most commonly used products are acid or anionic dyes, or metal-complex dyes;
   3.3) Fat liquoring: this step lubricates the fibres, improving tanned leathers' softness, surface handle and permeability to air; fats (natural and synthetic) and oils not soluble in water, emulsified or made emulsifiable (fatliquors) are used for this purpose;
   3.4) Fixation: this step uses acids or/and metals or other cationic agents.
4) (Dry)-finishing : this step comprises the application of protein oil, wax or /and other synthetic surface films with or without pigments and aniline dyes, in conjunction to a wide range of fast evolving technologies and materials to cover or mask defects and improve leather quality and performance quite often converting a highly hydrophilic product to a water and oil resistant material.

All necessary chemical operations in most tanneries are carried out in conventional wooden or in modern inox or synthetic reactors or mixers (called drums) and sometimes in puddles and pits, depending on the raw material origin and type of process applied. Hides / skins, pelts or leathers are tumbled for long periods of time in the presence of short or long aqueous baths and large excess of chemicals - to accelerate diffusion and achieve penetration through the full thickness of the materials, easily up to 7-8 mm - some of which are potentially toxic. Continuous flow processes are still evolving but necessitate a new generation of fast penetrating, salt-free chemicals and suitably prepared semi-processed materials.

In today's move to "sustainable production" the leather industry, as well as many other industries is recognized as polluting one. Traditional chemical operations are recognised as polluting, because of the levels of inorganic chemical waste. Process chemicals which are not consumed within the reactions necessary to convert collagen to leather are currently discharged to waste. These are usually applied during bulk production inorganic agents from beamhouse and tanning processes: lime, sulphide, ammonium salts, sulphuric acid and sodium chloride, mineral tanning agents - mainly Cr(III) and the less common Al(III), Zr(III), Ti(III), Fe(III) salts -, whereas depending on the tanning process and the leather article produced organic chemical waste discharged comprises aldehydic and polyphenolic tanning products, bating enzyme, organic carboxylic acids and excess electrolyte stable synthetic fatliquors. It is rare for chemicals and water to be recovered for re-use from several of these process steps.

Hitherto, the mineral tanning agent most frequently used throughout the world are salts of chromium (III), remains unsurpassed in the qualities offered to leather: these qualities include high hydrothermal, thermal and light stability and versatility with regard to the variety of leather articles which can be made from the intermediate, chromium(III) tanned leather

On the other hand, there are significant disadvantages, in particular: (I) when chromium(III) complexes with protein, the resulting leather is blue (wet blue). This makes it difficult to dye the leather to pastel shades. In addition, its use for tanning woolskins may impart colour to weathered wool tips, limiting the number of possible end products; (ii) in general, chromium uptake under typical technological conditions is of the order of 60 - 80 % of the offer (80-90 kg Cr-tanning salts/t of pelt weight), with 5-10 kg Cr2O3/t of raw hides/skins (6-7 g Cr (III) /Lt of exhaust tanning liquor) discharged with the process effluent; (iii) even though there is no legislation or norm that requires that chromium (III) should be absent from leathers, legislative limits and norms have been imposed for the total chromium or chromium (III) content in leather digest in conjunction to the concurrent legislative requirements for chromium (VI) absence (non detectable). In particular, Chromium (VI) and its salts are classified as known carcinogens also regulated by REACh Annex XIV as SVHCs; salts of chromium (VI) are not used for tanning and normally are absent from chromium (III) tanning salts.

However, apart from its potential presence in pigments colouring additives and fixatives, commercial chromium tanned leathers have been tested positive for the presence of chromium (VI) in quantities exceeding the stipulated legal or normative limits.

On the other hand, harmonisation with EU-Directives /Norms, as well as National / Regional legislation in countries where leather and leather products are exported, e.g Chemikalien Verbotverordung LMBG 1992, require that for Cr(VI) is not detectable in leathers; the corresponding voluntary International and National normative eco-certification specifications impose similar limits, namely: a) Ecolabel Dec.2002/231/CE Cr(VI) non-detectable (<3 ppm), using EN ISO 17075 standard testing method, b) SG, Cr(VI) measured should be less than 3 ppm, with EN ISO 17075 standard testing method applied for this purpose, as well as c) by the most recent directive for the automotive industry 2005/64/CE. The same eco-certification schemes stipulate limits in Cr(III) content: (i) in aqueous extracts of leathers and leathers products with water, artificial sweat or in some cases in their digest and (ii) in the effluent after depuration (1-3 ppm) that are impossible to match, if leathers continue to be tanned or/and retanned with Chromium (III) tanning agents.

These practical and operational constraints have resulted in attempts to find an alternative to chromium (III) tanning for the production of free-of-chrome ("FOC") leather, whilst retaining the mineral character in leather. Accordingly, Al (III) (J.H. Hernandez, JALCA, 78(8), 217, 1983; R A Hancock et al., J. Soc. Leather Technol. Chem, 64(2), 32, 1980), Zr (III), Ti (III & IV) (Bi Yu Peng et al, JALCA, 102(9), 261, 2007) ; Fe-salts (US 2006/01151738), their mixed salts US Patents 4 563 156 and 4 731 089, *Synektan TAL,* ICI) and most recently nano-silicates (Liu, Y, et al, JALCA, Vol. 105, 2010) and sodium waterglass (EU-funded Wasserglass Project, 2001-2003) were tested as effective partial or total replacement tanning agents or for the production of a reversibly tanned new intermediate semi-processed product and commodity: "wet-white" or "wet-stabilised" leather.

However, it was shown that the effectiveness of a tanning molecule depends on its ability to provide high molecular weight cross-linked moieties within the collagen molecule and was possible to propose reactive aluminum tanning agents preparations that match this requirement (GB 9001175.0, 1989).

Moreover, other heavy metals, like lead, cadmium, mercury, manganese, and metals like nickel, zinc, and copper, as well as antimony and arsenic cannot be considered as alternatives, since, despite the fact that are allowed, they are still classified as potentially harmful and strict limits apply for their concentration in leather.

Consequently, there exists a need for developing tanning processes where levels of mineral (metal) tanning agents and discharge of neutral salts employed during leather preservation and processing are reduced, while achieving the tanning properties of mineral (metal) tanning agents.

Natural full vegetable tanning has been carried out for thousands of years using either plant parts, fruits and roots or more recently enriched and quite often modified plant polyphenolic extracts, generally referred to as vegetable tannins.

However, vegetable tanning has some inherent drawbacks, in particular :
- the composition of natural products, like the commercially available vegetable tannin extracts, is variable,
- the hydrophilic character, due to the high content of neutral salts in vegetable tannins, is increased. Vegetable, as all commercial organic tanned leathers hitherto, stain and soil easily even with a single drop of water, whilst surface cleaning with aqueous means usually results in their permanent damage,
- the rate of tannin penetration is slow, making it necessary to enrich the tanning products with the addition of synthetic auxiliaries, additives, and/or modify and accelerate the tanning process or to prepare the substrate by pre-tanning with synthetic polymer or by pre-treating with polyphosphate or sodium sulphate,
- typically, the quantities of vegetable tannins (18% to 45% w/w) offered to the pelts are high, resulting in high levels in discharge streams;
- the colour light fastness is poor,
- dyeing of vegetable tanned leathers in pastel or vivid and dark shades is difficult whereas wet colour rub fastness is poor,
- the tear strength of vegetable tanned leathers is relatively poor.

On the other hand, synthetic organic tanning agents that are commercially available and proven in industrial application are only a few, whereas numerous agents are still at the research stage. None of these agents has sufficient tanning capacity to be considered as a replacement of Cr(III) or natural vegetable tanning.

The most widely applied synthetic tanning agents are primarily protein alkylating compounds like glutardialdehyde and its derivatives, polycyclic aldehydes, glyoxals and most recently oxazolidine, either alone or in combination with resins or vegetable tannins.

Technical grade glutardialdehyde replaced formaldehyde as a pretanning agent. In 1991, US patent 5 011 499 disclosed new formulations of derivatives of ω, ω'-dialdehydes (glutardialdehyde, succindialdehyde, adipindialdehyde) with hydroxyl compounds. Aldehyde tanned leathers showed improved mold resistance when compared to other organic or mineral tanned leathers, as well as complete wetability of dried semi-processed leathers -as for vegetable tanned leathers.

Semi-processed leathers with such synthetic tanning agents are erroneously called hitherto "wet-white", since inherently have a yellow colour that constitutes a significant process drawback. Modern aldehyde based pretanning formulations yield more light coloured semi-processed leathers. Other known process drawbacks are the following:
- leathers are quite full but sponge-like and extremely soft - often to an undesired extent - characterised by a distinctive odour that can be noxious - oxazolidine;
- their overall organoleptic properties are not those of mineral tanned leathers which are acceptable by the consumer;
- product finished leathers are often of inferior mechanical strength when compared to Cr(III) tanned leathers, but usually when dyed show good perspiration resistance and stability in acids and alkaline media.

However, the real concern when using synthetic tanning agents and aldehydes in particular is the presence of monomeric free-formaldehyde in their preparations as a synthetic by-product, exceeding the existing restrictions for free-formaldehyde content.

A combination tanning sytem based on dialginic acid using glutaraldehyde, oxazolidine and tetrakis hydroxymethyl phosponium sulfate (THPS) is disclosed in JALCA, 2011, 105, 50-58. However, the use of glutaraldehyde or oxazolidine is unable to solve the problem of potential release of free monomeric formaldehyde.

During the last decade, various preparations syntans (products of aliphatic modified aldehydes and disulphones or oxazolidines or triazines) with alleged zero free-formaldehyde content, were introduced to the market. However, no leather - experimental or commercial - has been reported to date that combined commercially acceptable aesthetic characteristics, physico-mechanical and fastness under stress performance with zero formaldehyde content.

The invention thus relates to a leather manufacturing process comprising the use of soluble oxidized starch-derived polysaccharide in all chemical operations employed during leather manufacture, in particular as tanning and/or retanning and/or dry finishing agent(s).

Starch is a complex carbohydrate abundant in the seeds of cereal plants and in bulbs and tubers. Starch polysaccharides are abundant, non-toxic, biodegradable natural polymers possessing a high degree of functionality.

The use of industrial potato starch for retanning lambskins which were pretanned with glutardialdehyde is reported in B. Naviglio et al., CPMC, 2009, 85, 195, 2009. Starch simply deposited and coated pelt fibres and experimental leathers showed poor hydrothermal stabilisation (Tₛ= 76 °C) and poor resistance during wet-heat moulding for model shoe manufacture.

Periodate oxidized polysaccharides (Periodate Di-Aldehyde Starch (DAS) was disclosed in US patents 2 648 629 (1953) and 2 713 553 (1955). Eventually, US 2 886 401 (1959) disclosed the use of "periodate oxy-polysaccharides" or "periodate dialdehyde starch" as pre-tanning agents and a single tanning agent. DAS is a poly-functional aldehydic derivative product obtained by oxidation of starch under specific conditions usually employing periodic acid or periodates. Later publications include the preparation of DAS as white powder insoluble in water and most known solvents by using potassium permanganate (Yeates et al., AACC, 1963, 40, 684) as oxidant with the reaction final step being a reduction using sodium metabisulphite. The isolated product was reported Mn-free but nevertheless no quantitative instrumental analytical data were ever presented, regarding the actual metal content of the compound. CAS-registered 9047-50-1 DAS is sparingly soluble in water and most solvents and possesses average molecular that ranges from 300.000 to 5x10⁶ Da.

Early studies on the interaction of collagen with DAS were reported by Y. Nayudamma et al., JALCA, 1961, 56, 548, , whereas the preparative advances made it possible at the time to formulate and test at laboratory scale periodate oxy-starch with oxidation levels ranging from 0 to 100% as a pre-tanning agent for sole leather manufacture (C. W. Beebeet al., JALCA, 1959, 54, 628,), as well as a single tanning agent (E. M. Filachioneet al., JALCA, 1961, 56, 200).

The DAS preparative protocols described hitherto had the following technological and economic limitations which rendered the commercial production of periodate oxy-starch non viable, namely:
- exclusive use was made of sodium meta-periodate, a very expensive commercially available reagent as oxidation agent;
- the solubilisation protocols involved either a relatively short process (30 minutes) carried out at 120° C in an autoclave or a long high pH protocol that necessitated 24 hours; for both methods it was necessary to administer in the tanning bath 26-27% sodium sulphate and 4,5% of sodium carbonate on moisture free pelt weight basis;
- the best results were obtained for a tanning reaction that lasted 24 hours, when conventional mineral tanning is complete in 6 to 8 hours; the latter result was obtained when using highly oxidised starch (96%) at pH =8,0 and with DAS offers ranging from 10 to 25% - on moisture free basis.

The studies mentioned above were replicated by Kanth S. V. et al., JALCA, 2006, 101, 444-453 who confirmed the results and tentatively explained the need for Autoclaved DAS (ADAS) or alkaline conditions used during DAS solubilisation and tanning. Under these conditions, DAS allegedly hydrolysed to lower molecular weight oligomeric species which showed better tanning properties when compared to polymeric ADAS species.

The GPC-determined Molecular Weight Distribution of DAS and ADAS as reported in this article is shown here below:
GPC-determined Molecular Weight Distribution of DAS and ADAS

| Average Mw (Daltons) | | % of MW fractions |
|---|---|---|
| | DAS | |
| 15.690.000 | | 74% |
| 435.000 | | 26% |
| | ADAS (pH=4) | |
| 15.155.000 | | 12% |
| 2.968.000 | | 12% |
| 532.000 | | 24% |
| 760 | | 52% |
| | ADAS (pH=10) | |
| 8.342.000 | | 3% |
| 1.686.000 | | 4% |
| 26.000 | | 20% |
| 385 | | 62% |

Consequently, the major disadvantages hitherto to tanning with periodate -oxidized autoclaved starch (ADAS) are :
- the need for transformation of the DAS which was insoluble in water and most solvents into a hydrolysate of variable and unknown composition prior to its use in the drum in the tanning process;
- the high unit cost of periodate-DAS and its limited availability;
- the 3-4 fold extended length of the tanning process;
- the need to carry out the tanning reaction at pH=8-10, when typically tanning is applied at the acidic pH range,
- the high quantities of electrolytes and salts added to obtain saturated with electrolytes process baths, and
- the presence of residual oxidant (periodate) and mineral salt impurities in periodate-DAS and in leathers tanned with its hydrolysates.

Aldehyde functional starches were disclosed in other fields and industrial applications as in binding cellulose fibers, to improve wet strength of the fibers.

U.S 3,251,826 discloses cationic starch hydrazones by introducing DAS to water (2.9% DAS) followed by 5% (DAS weight basis) betaine hydrazide hydrochloride dissolved in a few millilitres of acidified water.

U.S 4,001,032 reports a method of making stable, non-gelling, high-concentration aqueous cationic dialdehyde starch compositions useful for imparting wet and dry strength to paper and paper products comprising reacting dialdehyde starch in aqueous dispersions at concentrations of about 15% by weight with betaine hydrazide hydrochloride in amounts equal to from 3-5% of the dry weight of DAS at from 90° to 95° C.

U.S 3,093,439 discloses methods for tanning collagenous tissue material with periodate dialdehyde starch and, eventually, U.S 4,083,066 reported proteolysis and powder DAS-tanning in continuous flow of collagen tubes for heterologous arterial transplants preparation. Again corn-DAS preparation is carried out using sodium metaperiodate as an oxidising agent.

All prior-art DAS and ADAS compositions applied for leather tanning were produced exclusively by using periodic acid that yields an insoluble biopolymer in water or common organic solvents, even after its complete oxidation. According to the most recent scientific communications on the subject (Casu, B., Macromolecules, 1985, 18, 2762; Rahn, K. et al., Cellylose Chemistry and Technology, 1998, 32, 172), DAS becomes watersoluble only after reduction of its aldehyde groups to primary alcohols or to carboxylic acid groups by chlorite oxidation; DAS insolubility has been ascribed to hemiacetal formation of aldehyde groups with starch's remaining hydroxyl groups (Gal'braikh, L.S et al., Cellulose and cellulose derivatives, New York, Wiley/Interscience; Mester, L., J.A.C.S, 1955, 77, 5452).

According to a first aspect, the invention thus relates to a leather manufacturing process comprising at least one step where pelts are treated with a composition containing a soluble oxidized starch-derived polysaccharide comprising units of formula (I) 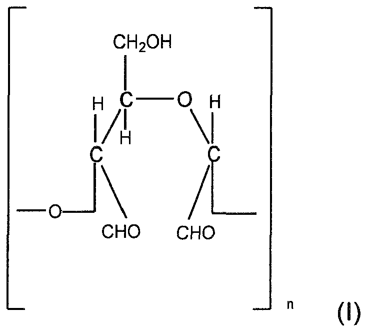 wherein n=1 to 10000
and water,
wherein said soluble oxidized starch-derived polysaccharide comprises approximately 50 to 70%, preferably 60 to 70% by weight of units of formula (I) in which n=2 to 18, having molecular weights ranging from approximately 350 Da to 3300 Da.

The soluble oxidized starch-derived polysaccharide comprising units of formula (I) as described above will be eventually referred to hereafter as "SDAS" (for Soluble Di-Aldehyde Starch).

Preferably, the average molecular weight of the soluble oxidized starch-derived polysaccharide is approximately 8000 to 9000 Da, preferably 8200 Da.

According to the invention, starch can be selected, for example, from the group consisting of wheat starch, potato starch, corn starch, sweet potato starch, tapioca starch, cassava starch, sago starch and rice starch. Corn starch, also called maize starch, is preferred.

Preferably, the aldehydic reactivity of the soluble oxidized starch-derived polysaccharide comprising units of formula (I) in the composition is approximately 2 to 4.10⁻²M/kg.

The aldehydic reactivity can be measured as disclosed in S.V.Kanth et al., J. Soc. Leather Technologists and Chemists, 91, 252, 2007 by using a hydroxylamine reagent, while omitting the suspension and gelatinization steps.

Briefly, the method consists in mixing the oxidized starch in boiling water, adding the hydroxylamine reagent, heating at 40°C for 4 hours, and titrating the reaction mixture to pH 3.2 with HCl.

Preferably, the dry content of oxidized starch-derived polysaccharide comprising units of formula (I) in the composition is approximately 40 to 50 weight % or more. The dry matter content of the composition was measured after keeping the solution in a ventilated drying oven until weight constancy.

Preferably, the active substance content in the composition containing a soluble oxidized starch-derived polysaccharide comprising units of formula (I) is approximately of 25 to 40% by weight.

Without wishing to be bound by theory, it is hypothesized that the units of formula (I) in which n=2 to 18 (dimers to oligomers having 18 units), which have molecular weights ranging from approximately 350 Da to 3300 Da, are medium-low molecular weight species which, in particular, have a moderate to high tanning efficiency capacity and can penetrate though the pelt substance according to the invention.

Preferably, the compounds of formula (I) comprising units in which n=2 to 18 (dimers to oligomers having 18 units), which have molecular weights ranging from approximately 350 Da to 3300 Da, are present as active substance in the composition in an amount of approximately 28 to 40 weight %.

It is however not excluded that the compounds of formula (I) comprise units in which n=1 (monomers) or other low molecular weight compounds originating from the process for obtaining the oxidized polysaccharide, which may also take part in the tanning efficiency.

Also, it is not excluded that the soluble oxidized starch-derived polysaccharide may contain units of formula (I) in which the aldehyde groups are converted to carboxylic groups, namely dicarboxylic units, due to extensive oxidation. These dicarboxylic units do not have tanning efficiency.

Said composition has, preferably, a final pH of 2.3 to 2.7, preferably 2.5. Alternatively said aqueous composition can be adjusted to a final pH of 3.5 to 10.0 using, for example, sodium or potassium acetate solutions or sodium or potassium hydroxide solutions.

In the tanning process of the invention, the composition containing the oxidized starch-derived polysaccharide comprising units of formula (I) and water as described above can be used either alone, or in combination with other tanning or re-tanning and dedicated fatliquoring agents which are usual in the technical field or tailored applied for the purposes of specific article manufacturing.

Said tanning or retanning agents and can be, for instance, selected from the group consisting of phenolic tanning agents (syntans), natural vegetable tanning extracts, protein-based products and fillers, resins and copolymers.

Said fatliquoring agents can be, for instance, selected from the group consisting of sulphited, sulphated or sulphonated natural, semi-synthetic and synthetic fatliquors as well as mixtures of emulsifying agents and ionic or cationic fatliquors.

The oxidized starch-derived polysaccharide (SDAS) as defined above, preferably directly in the form of an aqueous solution can also be used as tear strength enhancer agent. "Tear strength enhancement "is understood herein as increasing at least by 20% the tear load measured for leathers tanned with SDAS, compared to leathers tanned with Cr-tanning agents or with a combination of tanning agents (semi-Cr tanning).

The leather manufacturing (tanning) process according to the invention can be performed as "solo-tanning", or as "all-in-one" process".

"Solo-tanning" means that the oxidized starch-derived polysaccharide as described above is used as only tanning agent.

"All-in-one" process" means that the oxidized starch-derived polysaccharide as described above and syntans were used in the same bath, aiming at a compact one-step leather manufacturing process from pickled to white-crust leather.

A step of oil-impregnation of pelts may be carried out prior to using the composition containing a soluble oxidized starch-derived polysaccharide comprising units of formula (I) described above, as tanning and/or retanning agent, in order to moderate and control the astringency and rate of penetration of the hydrophilic SDAS products.

This step of oil-impregnation can be performed on pickled pelts or stabilized pelts.

Alternatively, this step of oil-impregnation can be performed after tanning.

In a preferred embodiment, the invention relates to a leather manufacturing process, comprising the steps of :
- oil-impregnating the pelts and/or treating the pelts with a synthetic organic pre-tanning agent,
- providing a composition containing a soluble oxidized starch-derived polysaccharide comprising units of formula (I) as described above and water as tanning agent,
- optionally, retanning in the same bath with synthetic tanning agents, or in a new bath with a composition containing a soluble oxidized starch-derived polysaccharide comprising units of formula (I) and water, and/or with synthetic tanning agents, and/or with natural tanning agents.

Advantageously, the leather manufacturing process according to the invention comprises the additional steps of :
- fat-liquoring,
- dyeing, and
- dry-finishing.

The offer of the composition containing a soluble oxidized starch-derived polysaccharide comprising units of formula (I) and water as tanning agent is preferably from 2 to 40 % by weight of pickled pelts.

The offer of the composition containing a soluble oxidized starch-derived polysaccharide comprising units of formula (I) and water as retanning agent is preferably from 4 to 20 % by weight of pelts.

Advantageously, the leather-manufacturing process according to the invention lasts approximately 4.5 to 6 hours from pickled pelts to wet-white leather when using the "all-in-one" alternative, while Cr-tanning lasts approximately 8 to 12 hours, and an ADAS or FOC-tanning process lasts 24 to 36 hours.

Another advantage is that the leather manufacturing process according to the invention can be carried out at ambient temperature, from about 10°C to 25°C, without heating or pre-heating the tanning liquors, while high-exhaust Cr-tanning , synthetic organic or cutting edge FOC-tanning (e.g. GRANOFIN Easy tan F90® Clariant) often require heat induction. In these prior art methods, tanning baths are usually heated to 35-45°C over prolonged periods of time.

Advantageously, it has been found that when using the leather-manufacturing process according to the invention, the total metal content in digests of leather samples (obtained according to ENISO 17072-2 : 2011 standard) matches the expectation for soluble or leachable metals (extract). In particular, a total metal content which is equal or less than 30 ppm, or even 20 ppm can be obtained.

Finally, the spent tanning liquors issued from the leather manufacturing process according to the invention noticeably contain non-significant concentrations of free or hydrolyzed monomeric formaldehyde and phenols.

The invention also relates to a composition containing a soluble oxidized starch-derived polysaccharide comprising units of formula (I) as defined above 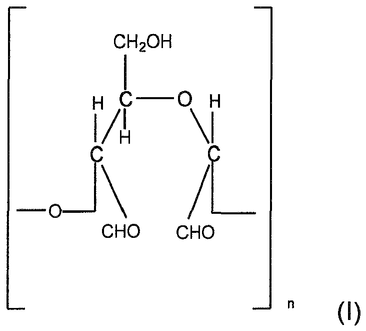 wherein n=1 to 10000
and water,
wherein said soluble oxidized starch-derived polysaccharide comprises approximately 50 to 70%, preferably 60 to 70% by weight of units of formula (I) in which n=2 to 18, having molecular weights ranging from approximately 350 Da to 3300 Da.

Preferably, the average molecular weight of the soluble oxidized starch-derived polysaccharide is approximately 8000 to 9000 Da, preferably 8200 Da.

Preferably, the dry substance content of the oxidized starch-derived polysaccharide comprising units of formula (I) in the composition is approximately 40 to 50 weight % or more.

The active substance content in the composition containing a soluble oxidized starch-derived polysaccharide comprising units of formula (I) can be, approximately, of 25 to 40% by weight.

Preferably, the compounds of formula (I) comprising units in which n=2 to 18 (dimers to oligomers having 18 units), which have molecular weights ranging from approximately 350 Da to 3300 Da, are present as active substance in the composition in an amount of approximately 28 to 40% by weight.

Preferably, the aldehydic reactivity of the soluble oxidized starch-derived polysaccharide comprising units of formula (I) in the composition is approximately 2 to 4.10⁻²M/kg.

Said composition has, preferably, a final pH of 2.3 to 2.7, preferably 2.5. Alternatively said aqueous composition is adjusted to a final pH of 3.5 to 10.0 using, for example, sodium or potassium acetate solutions or sodium or potassium hydroxide solutions.

Advantageously, the composition containing a soluble oxidized starch-derived polysaccharide according to the invention has a content in neutral salts, such as, for example, NaSO₄ or NaCl, of less than 3%.

The soluble oxidized starch-derived polysaccharide comprising units of formula (I), as such, which can be obtained in dry form from the aqueous composition of the invention, for example after evaporating water from the composition, is another object of the invention.

Alternatively, said compound of formula (I) can be obtained under lyophilized form , for example by using the process described in M. Albu et al., 2010, Leather and Footwear Journal, 10, 39-50.

Shortly, the lyophilized process comprises;
- cooling below the freezing temperature,
- sublimation of ice at subfreezing temperature, performed under reduced pressure,
- removal of residual, unfrozen water from the solidified solution. Preferably, the lyophilization process is performed during 24-48 hours, preferably 36 hours, for example as follows:a solution of oxidized starch-derived polysaccharide of formula (I) is freezed to a final temperature of -40°C over 3 hours, sublimation is carried out under a vacuum of 0.1 mbar, then primary drying is carried out for 10 hours at -40°C, and secondary drying is performed for 23 hours with gradual rise of temperature (3°C/min) to 35°C, under a final pressure of 0.01 mbar.

The lyophilized soluble oxidized starch-derived polysaccharide comprising units of formula (I) is an object of the invention.

All the preferred embodiments mentioned above which apply to compositions containing a soluble oxidized starch-derived polysaccharide comprising units of formula (I), also apply to the soluble oxidized starch-derived polysaccharide of formula (I) as such.

The invention also relates to a method for preparing an oxidized starch-derived polysaccharide composition comprising units of formula (I) as defined above, comprising the steps of:
- submitting a suspension of starch in water to homogenization,
- adding an oxidizing agent, preferably hydrogen peroxide,
- heating the reaction mixture to a temperature of approximately 95°C to boiling temperature, preferably 100°C,
- monitoring the start of an exothermic reaction,
- adjusting the temperature so that the exothermic reaction continues until completion of oxidation, and
- cooling the reaction in order to stop the oxidation, preferably below 50°C.

The method according to the invention makes it possible to obtain a soluble oxidized starch-derived polysaccharide (SDAS), through a novel inorganic and organic salt and residue free spontaneous exothermic oxidation method, coupled with the endothermic suspension and solubilisation of industrial grade starches at relatively moderate temperature and under strongly acidic conditions, which, in turn, enable solubilised starch oxidation reaction control.

Without wishing to be bound by a theory, it is hypothesized that native starch's hydroxyl groups are protected from participating to hemiacetal formation, since these are not available for the oxidation reaction under the invention method physical conditions.

The method according to the invention relies upon applying a selected oxidation process, under a novel tailored set of rapid temperature oxidation and solubilisation conditions. Moreover, the invention method is free of residual iodate salts or iodic acid, Mn(IV)-oxides or salts, chlorides and their salts.

The preferred features of the method for preparing an oxidized starch-derived polysaccharide according to the invention comprise the following ones:
- Hydrogen peroxide is used as a 35% solution;
- The weight ratio of water/starch is preferably about 1.3 to 1.5/1 expressed in parts per weight. The starch is preferably added to water by parts, some part, for instance 1/3 of the starch being added at the beginning of the process, and the remaining amount of starch being added to the reaction mixture at a later stage, preferably after the boiling temperature has been reached.
- The oxidation reaction is monitored by the development of an exothermic reaction: preferably, the exothermic reaction is conducted for 3-4 hours, while heating is continued.
- The ratio of hydrogen peroxide / starch is of 1.1 to 1.3 /1, expressed in meq.
- After completion of the oxidation reaction, the reaction mixture is cooled in order to avoid yellowing of the oxidized starch-derived polysaccharide.

Preferably, the reaction mixture comprise, expressed in weight %, 20% of hydrogen peroxide, 30% of starch, and 50% of water.

The completion of the oxidation reaction may be monitored by usual means, such as, for instance, an iodine-iodine water solution or an iodide ethylic alcohol solution which changes colour in the presence of native starch.

Preferably, the final solution containing the oxidized starch-derived polysaccharide thus obtained has a pH of 2.3 to 2.7, preferably 2.5.

Alternatively, the pH of the final solution containing oxidized starch-derived polysaccharide can be increased by the addition of a base, for example potassium hydroxide, sodium hydroxide or potassium acetate in order to obtain has a final pH of 3.5 to 10.0.

Thus, the method for preparing an oxidized starch-derived polysaccharide according to the invention can optionally comprise an additional step of pH adjustment, depending upon the tanning and/or reaction environment which will be applied during leather manufacture.

The advantages of the soluble oxidized starch-derived polysaccharide (SDAS) are, in particular, as follows:
- SDAS is a stable non-gelling suspension free of organic and inorganic salts and oxidants ready for drum application.
- Preparative protocols are short.
- The oxidation - solubilisation method is simplified and cost effective.
- Autoclaving is not needed.
- The SDAS solution is highly concentrated (40 to 50 % in weight) and stable, ready to apply also using novel continuous flow immersion machines, as well as acetone dehydrated neutralised pelts as substrates; which was not technically applicable when using commercial blends of cationic DAS, ADAS or periodate-DAS in alkaline salt saturated tanning conditions.
- The preparation has an extremely low neutral salt content (2-3%), whereas it is no longer necessary to administer in the tanning drum almost 32% (w/w) of neutral salts for the tanning reaction.
- The SDAS "solo-tanning process", which means that the oxidized starch-derived polysaccharide of the invention is used as only tanning agent from oil impregnated pelt to wet-white, lasts up to 4-6 hours.
- The SDAS "all-in-one" process, which means that the oxidized starch-derived polysaccharide of the invention and syntans are used in the same bath process, from oil impregnated pelt to wet-white or white crust can last from 4 to 12 hours, preferably 4 to 6 hours, while the conventional and known prior art processes span 1-3 working days with several intermediate processes and operations (net duration: 18-24 hours).

The use of the oxidized starch-derived polysaccharide (SDAS) as defined above offers substantial benefits as well as economic and ecological advantages in terms of process engineering over mineral and natural or synthetic organic tanning.

More specifically, the following improvements are obtained:
(i) Absence of the harmful substances from product leathers tanned or retanned and fatliquored with the invention products or compositions in compliance with the requirements of voluntary concurrent eco-labeling certification schemes.
(ii) Production of metal- and SVHCs- free as well as zero free-formaldehyde content leathers, by applying simple, rapid and highly efficient processes and organic materials with an extremely low neutral salt content production without, however, compromising quality;
(iii) Due to the adequate semi-processed leather (wet white) hydrothermal stabilisation and good wet fatness of the tanning agents according to the invention, the post-tanning mechanical operations and chemical processes (re-tanning, dyeing, fatliquoring) do not cause any significant protein damage or loss of tanning agent in the process exhaust liquors. This, in turn, simplifies discharge, treatment and re-use / disposal.
(iv) The amounts of chemicals employed are significantly reduced and the protocols rely again on the invention formulation for retanning and fatliquoring, with only minor additions of specialty selected chemicals, which are necessary for specialty leather production. Fungicides, surfactants, dyeing assistants, such as penetration auxiliaries and electrolyte salts are not necessary in the leather manufacturing process according to the invention.
(v) Dyeing of the invention semi-processed leathers (wet white and white crust) was uniform with no need for selection of dyestuffs as witnessed for mineral tannages other than chromium (III), whereas it is possible to dye deep and pastel shades with exceptional dyeing yield, particularly if reactive dyes are used. Moreover, in the leather manufacturing process according to the invention, the colour bleaching effect of most re-tanning agents and auxiliaries can be substantially avoided. The known disadvantages of highly cationic charged Al(III) and zirconium(III) tanned leathers, as well as those observed in anionic tanned leathers (vegetable and synthetic organic tanned) in terms of dyeing yield, and dye fastness are circumvented, as the leathers are processed with success during drum anionic, reactive and cationic dyeing, as well as in the typical anionic dyeing baths when using modern immersion dyeing machines.
(vi) Product crust and finished leathers tanned according to the invetion have smooth and tight grains or milled grains - obtained from the drum if desired - with a spectacular natural aesthetic appearance and light weight and, therefore, superior in terms of organoleptic qualities of all other organic tanned leathers
(vii) Effluent full biological treatment processes and control are simplified; this is achieved with the elimination of the need for chrome containing effluent segregation and treatment for chrome removal, as well as with the reduction in the excess quantities of tensides discharged in the main effluent stream, routinely removed during skimming end-of-the-pipe processes with natural fats, the bulk of which is contained in beamhouse effluent.
(viii) Reduction of BOD and COD charges in mixed tannery effluent by 10 to 30%, through the replacement of vegetable tannins, with the easier biodegradable polysaccharide base organic invention products and compositions.
(ix) VOC emissions in the workplace reduction and enhanced control, through the successful replacement hitherto applied in commercial production purely synthetic organic tanning and retanning agents.
(x) Accelerated artificial ageing tests in polluted city microenvironments have been carried out on selected range of SDAS-tanned samples, run together with full vegetable tanned leathers, semi-chrome and chrome control commercial finished leather probes. Testing device and regime have so far been used only for archival bookbinding and restoration leathers evaluation, a development co-financed by the EU for over a decade, but until now not taken up by the Industry *(*Roy S. Thomson, International Council of Museums (ICOM), Working Group "Leather and Related Materials" - Groupe de Travail "Cuir et Matériaux Associés" - 21-24 April 2004, Byzantine & Christian Museum, Athens*)* The SDAS-tanned samples have demonstrated superior resistance to ageing under the conditions applied, whereas semi-chrome, full vegetable and chrome-tanned reference and commercial leathers collapse after 4 or 8 weeks in the chamber.

The invention is well suitable for eco-ethical (eco-ethical: guaranteed life cycle low environmental impact and carbon footprint) leather manufacture. In particular, when used alone or in combination with other selected synthetic organic agents (syntans), white coloured supra natural and ultra light leathers of small and large dimensions can be obtained, while combining the desirable blend of traditional aesthetic characteristics with metal-free and harmful substance-free composition, technical performance and serviceability - "easy care" - attributes expected from modern leather product ranges.

The new SDAS products and compositions according to the invention can be used in continuous flow automated machines. Alternatively new vegetable starch-derived products and compositions according to the invention can be used either alone or combined with suitable selected aldehyde-free and metal-free commercial products in the retanning and fatliquoring stages of metal-free leather production, but also for the production of most well known types of commercial leathers.

The invention is illustrated in a non limiting way by the following examples.

In the following examples, the mention "solo-tanning" means that the oxidized starch-derived polysaccharide of the invention (also referred to as SDAS) was used as only tanning agent, and the mention "all-in-one" means that the oxidized starch-derived polysaccharide of the invention (also referred to as SDAS) and syntans were used in the same bath.

### Example 1: Preparation of SDAS tanning agent

75 kg of commercial industrial grade maize starch were stirred into 315 l of tap water and the resulting suspension was homogenised under continuous stirring (30 rpm) at room temperature (approximately 20°C).144 kg of hydrogen peroxide 35% are loaded and the resulting suspension is still homogenised under continuous stirring at room temperature.

The reaction mixture is heated in order to reach a temperature of approximately 100°C, where the reaction mixture starts to boil. A thick foam is generated in the mixture from about 90°C. Heating is maintained and the early hydrolysis allows -without causing an excessive thickness of the reaction mixture- to load 150 kg of maize starch, very slowly, ensuring that temperature and foam do not decrease too much.

When the temperature is the same as before loading the second part of maize starch, the stirrer speed is little by little increased to approximately 50 rpm. The heating of the reaction mixture is slowly carried out and an exothermic reaction starts. It is empirically detected by the development of a sharp smell and the change of viscosity of the reaction mixture. The stirrer speed is gradually increased to approximately 80 rpm. The hydrolysis and, at the same time, the oxidation are coupled in situ, occur.

Further heating of the reaction mixture to approximately 100°C is slowly carried out in order not to block the exothermic reaction. The exothermic reaction lasts for about 3-4 hours.

Iodide-iodine water solution or iodide ethylic alcohol solution are used as indicators that show the end of the reaction, namely the absence of native starch (change of colour in the presence of native starch).

When the foam and the temperature decrease and the indicator show that the presence of native starch is not significant, the reaction mixture is cooled below 50°C.

The final pH is 2.3 -2.7, preferably pH=2.5, the concentration of the oxidized starch-derived polysaccharide (hereafter referred to as SDAS) is 40 to 50% and the di-aldheyde content is 35-40% as measured by the acidimetric method described earlier.

The composition of the SDAS product is reported in Table 1 below. The measures were carried out by the methods disclosed in Kanth S. V. et al., JALCA, 2006, 101, 444-453.

**Table 1**

| **MW** | **SDAS** | |
|---|---|---|
| | **%** | **Σ %** |
| < 369 | 14,356 | 14,36 |
| 369 | 5,450 | 19,81 |
| 461 | 7,067 | 26,87 |
| 547 | 7,558 | 34,43 |
| 609 | 7,345 | 41,78 |
| 719 | 7,866 | 49,64 |
| 907 | 6,827 | 56,47 |
| 1139 | 5,784 | 62,25 |
| 1422 | 4,607 | 66,86 |
| 1771 | 4,029 | 70,89 |
| 2192 | 3,333 | 74,22 |
| 2701 | 3,300 | 77,52 |
| 3313 | 2,676 | 80,20 |
| 4032 | 2,208 | 82,41 |
| 4866 | 1,696 | 84,10 |
| 5815 | 1,352 | 85,45 |
| 6864 | 1,049 | 86,50 |
| 8029 | 0,866 | 87,37 |
| 9328 | 0,783 | 88,15 |
| 10713 | 0,673 | 88,83 |
| 12231 | 0,698 | 89,52 |
| 13821 | 0,621 | 90,14 |
| 15519 | 0,685 | 90,83 |
| 17393 | 0,647 | 91,48 |
| 19252 | 0,598 | 92,07 |
| 21340 | 0,694 | 92,77 |
| 23737 | 0,678 | 93,45 |
| 26278 | 0,628 | 94,07 |
| 29173 | 0,640 | 94,71 |
| 32677 | 0,664 | 95,38 |
| 36787 | 0,618 | 96,00 |
| 41775 | 0,598 | 96,59 |
| 48181 | 0,596 | 97,19 |
| 56280 | 0,500 | 97,69 |
| 67068 | 0,490 | 98,18 |
| 81999 | 0,375 | 98,56 |
| 102514 | 0,266 | 98,82 |
| 154636 | 0,220 | 99,04 |
| 198575 | 0,217 | 99,26 |
| 246185 | 0,233 | 99,49 |
| 357670 | 0,187 | 99,68 |
| 550221 | 0,147 | 99,83 |
| 884667 | 0,087 | 99,91 |
| > 884667 | 0,085 | 100,00 |

The aldehydic reactivity was measured as disclosed in S.V.Kanth et al., J. Soc. Leather Technologists and Chemists, 91, 253, 2007 by using a hydroxylamine reagent. The results are as follows :

| | Amount of substance / mass | Amount of substance / volume |
|---|---|---|
| Aldehyde-content in sample | 5,93×10⁻⁵ mole/g | 6,85×10⁻⁵ mole/ml |
| Dialdehyde-content in sample | 2,96×10⁻⁵ mole/g or 2,96×10⁻² mole/kg | 3,42×10⁻⁵ mole/ml or 3,42×10⁻² mole/I |

### Example 2 :Fiber oiling / impregnation

Commercial pickled pelts (origins: Norway, Italy, Romania, Poland, Ukraine, Greece, Syria) were dehydrated (draining, pressing or centrifuging or polar solvent dehydration), immersed in an aqueous emulsion of 1 to 8% of a mix of synthetic oil with emulsifiers (fatliquor >95% active substance content, 50-100%, w/w water at 20-30°C, preferably 80%) that contained cooking salt (8% - 10% w/w and had a measured density of 1.06 to 1.07 g/cm³ (9 -10°Be). Pelts were drummed using wooden, polypropylene or inox-steel tannery drums running at 4-6 rpm for 1-4 hours or processed though a continuous flow immersion machine to achieve bath exhaustion and complete impregnation of the collagenic fiber superstructure. Despite the high offers of oil no loose grain or bagginess detected on tanned, crust or finished leathers.

Product oil-impregnated pelts are ready for tanning and crusting - when applicable - in the same bath.

### Example 3: Solo-SDAS metal-free tanning of pickled veal pelts (Reference numbers EA 132/EA132C)

Oil-impregnated pelts produced as in Example 2 were tanned with 15-40%, preferably 30% w/w, on pickled drained weight basis of the oxidized starch-derived polysaccharide of example 1 in aqueous solution (SDAS tanning agent) administered in 2-to-3 equal dosages and drum run for a total of 240-360 minutes.

The degree of penetration of the SDAS tanning agent was monitored using a tailored-made fuchsine-sulphurus acid bi-component indicator prepared and tested positively by the inventors, based on H. Schiff, Ann. 140, 93, 1866.

At this point, tanning bath was gradually brought to an end pH=3.7 -3.8, by using:
a) 20-to-40% of crystalline sodium hyposulphite, administered in 2 or 3 dosages, respectively, and then sodium acetate (liquid, 4-to-6% w/w offer) or sodium bicarbonate (0.5-to-1.5% w/w offer, dissolved 1:20) (reference number EA 132C), over 3 hours or
b) sodium acetate (liquid, 6-to-8% w/w offer) or sodium bicarbonate (1-1.5% w/w offer, dissolved 1:20) (reference number EA 132); Basification duration was 60 to 90 min.

### Example 4 :"All-in-one"-SDAS tanning - syntan retanning - fatliquoring (single bath hybrid compact process) - Reference number EA129

Oil-impregnated pelts (100 kgs pickled weight) produced as in Example 3 immersed in the exhaust liquor of process of Example 2 (50-90 1, 1.05 - 1.06 g/cm³ (8-9°Be), 25 °C) and the SDAS solution of Example 1, was administered at offers ranging from 2 to 15% on pickled pelts' weight basis, preferably 8% w/w. The drum run at 4-6 rpm over 90-120 min. Residual exhaust bath remained turbid due to the presence of salt and synthetic fatliquor not taken up completely by the pelts - depending on the initial oil offer and the degree of dehydration of pickled pelts. The tanning reaction initial pH was equal to 2.5-3.0, preferably pH=2.7.

At this point retanning using selected syntans was applied. In particular, two to three dosages of a mixture (4.5:10) of a condensation polymeric phenolic product (56% active substance, pH=3-4, methylene bonded condensates of aryl-sulphonic acids, sodium salt and hydroxyaryl-sulphones) together with a formaldehyde-free syntan (94-98% active substance, pH= 4, condensation derivatives) with dispersing action. The total offer of syntans ranged from 20% to 30%, depending on raw stock origin and desired end product properties.

Retanning duration ranged from 2 to 12 hours (with intermediate drum stopping) for lime split and full substance pelts, respectively. End pH was 3.3-3.6 and basification was carried out gradually as in example 3, making sure that end pH was equal to 3.7-3.8. Leathers were drained well, no fungicide added in tanning bath and horsed up for at least 3 days until their colour started darkening. At this point, wet-white leathers were pressed and shaved and then suspended to hang-free air dry at ambient temperature.

### Example 5: Metal-free high-stability combination syntan/ SDAS tanning Reference number EA122B

Oil-impregnated pelts produced as in Example 2 were immersed in the exhaust liquor of process of Example 2 (50-60 I, 1.06 g/cm³ (9°Be), 25 °C) and 2-5% w/w of a methylene-linked condensation product based on cyclic nitrogen compounds (Tannit CT, Dr. Boehme) was added as a pre-tanning agent; drum run for 3 hours at 4 rpm and end pH was 3.7; at this point, bath was gradually acidified with the addition of 0,1% formic acid prior to the administration in 3 doses of 10 to 30% of SDAS of example 1 was employed and in this case the acidification step was not necessary.

SDAS tanning reaction run for at least 4 hours prior to the addition of 5-10% of a selected replacement polymeric syntan (56% active substance, pH=3-4, methylene-bonded condensates of aryl-sulphonic acids, sodium salt and hydroxy-aryl-sulphones) in powder form. The drum run for 2 hours at 6-7 rpm and the end pH was equal to 3.7-3.8. At this point to improve bath exhaustion the tanning bath was basified by using a solution (5% w/w) of sodium bicarbonate to a total offer of 1-2% and the final pH prior to drum draining was equal to 4.2. Pelts were washed with water at 25 C, horsed for at least 3 days until their colour started darkening. At this point, wet-white leathers were pressed and shaved and then suspended to hang-free air dry at ambient temperature.

### Example 6 : Dyeing of "all-in-one" metal-free zero-formaldehyde content white crust leathers

Pelts obtained in example 4 was washed using a new aqueous bath (200% on crust weight) at approximately 35 °C for 5 min. Alternatively, crust leathers were allowed to wet back in a new bath at 40°C over a period of 15-20 min, whilst there was no need for the addition of non-anionic surfactants, typically applied at this stage in commercial production. Foam generated can be reduced by using anti-foaming agents, routinely applied in retanning. Leathers were drained well and washed for 5 min with running water at 40-50 °C.

Dyeing with anionic azoic dyes free of metals (2-10% w/w offer) was carried out in a new bath (600% w/w, 40-50 °C) over a period of 60-90 min, Dyestuffs were dissolved in water at 70 °C 1:20 and dye solution was allowed to cool down to 50 °C prior to its administration to the drum and leathers. Fixation was carried out using dilute formic acid (1:10, up to 1/2 the total dyestuff quantity. Leathers were then drained well and top dyeing was carried out as and if required over 30 min, followed by fixation again using dilute formic acid that lasted 60 min, respectively. Leathers were drained and washed and then horsed up from at least 8 hours. Next day dyed leathers were set out with a combination machine, hanged-free to dry.

Dry dyed crust leathers were soft and easy to stake without conditioning. Toggle-dried dyed leathers were exceptionally light and natural. Finishing of such leathers was easy by applying conventional aniline and semi-aniline aqueous systems.

### Example 7 :Crusting (retanning + fatliquoring + direct dyeing) of "all-in-one" and metal-free-low-formaldehyde content white crust leathers (No. 1006 -Reference number EA129)

White crust leathers as per example 4 were wet back in a preheated drum and with 200-600% w/w water at 40 °C over 60 min (rest 15 min - run 10 min - rest 10 min - run 15 min). Leathers were drained well and washed briefly (5 min) with warm running water; foam generated can be reduced by using anti-foam reagents routinely applied.

Anionic retanning was carried out in a new bath (100% water at 40 °C) after a prefatliquoring process with synthetic electrolyte resistant can be applied (0.5-3% w/w) without prior deacidification. For this purpose a selected liquid syntan was used (NUBUCTAN SB, SEICI, 10-15°% offer, condensation product of di-hydroxy-diphenyl sulphone, pH=3.5, 40-45% active substance) together with a specialty condensation polymer of phenol with formaldehyde (Basyntan SL, BASF, 98% active substance, pH=3.8). The total anionic retanning duration varied from 2-4 hours, followed by fixation with a small quantity of formic acid (0.5% w/w, 1:10). Leathers were then drained and prepared for a clearing process; namely, in a new bath (200% of water at 35°C) a mixture of oxalic acid and sequestering agent EDTA (0.2% w/w offer, CLARTAN, SILVATEAM). The process run for 20 min and leathers were eventually drained and washed well with water at 35 °C (200% for 10 min). For the specific article full penetration of dyestuffs was not required and leathers were dyed with anionic dye - 0.5-2% w/w, preferably azoic metal-free dyestuffs - followed by fixation with dilute formic acid (1-2% w/w, 1:10) and/or an organic - metal-free - cationic fixing agent (typically polyoxyethylene fatty amine derivatives or polyquaternary amines, e.g. INVADERM S, TECHNODERM S, REPIFIX HT) in the same or a new bath after washing leathers.

Depending on the colour desired top dyeing can be applied in a new bath. Leathers were washed, horsed up, set-out and hanged-free to dryness at ambient temperature, when a soft product was desired. Drying with hot air and at elevated temperatures with leathers been toggled resulted in compact products most suitable for domestic application as panels or tiles. Leathers were finished by a simple glazing process.

### Example 8 : Retanning and fatliquoring of "solo-SDAS" tanned wet-white for the production of metal-free zero-formaldehyde content white crust leathers (No. 1013- reference number EA132C)

Tanned leathers as per example 3, pressed and shaved to 1.5 and 2.0 mm were immersed in a new bath (50-80% w/shaved weight, 30 °C) and retanned first with a selected condensation polymeric phenolic product (10% w/shaved weight, Tanigan OS, BAYER, 56% active substance, pH=3-4, methylene-bonded condensates of aryl-sulphonic acids, sodium salt and hydroxy-aryl-sulphones) in powder form - offer 5% w/shaved weight). The drum run for at least 40 min and then a selected liquid syntan (10% w/shaved weight, NUBUCTAN SB, SEICI, condensation product of di-hydroxy-diphenyl sulphone, pH=3.5, 40-45% active substance) administered in two equal doses over 3 hours. At this point leathers were drained well and washed with water at 35 °C.

If necessary a second anionic retannage was carried out in a new bath using 2% of a commercial vegetable tannin dispersing agent (BLANCOTAN SN, SILVA TEAM, synthetic condensation product of neutralised naphthalene-sulphonic acids, 27-28% tans - 21-22% non-tans, pH(1:10) =6.8-7.2). After the drum has run for 30 min, 8% of a selected vegetable tannin (Tara Pods, VANDOTAN T, VANDONI) was administered in two doses over 3 hours and the bath was well exhausted. In order to optimize bath exhaustion even further 0.3% of dilute formic acid (1:10) were administered over 20 min.

Leathers were drained and cleared as per example 7, washed and then dyed in a new bath. Leathers were immersed in 250% of water at 45°C and drummed for 5 min only with a dye dispersing agent (SINCAL ZA. Z&S 1:5) prior to the administration of the dyestuff mixtures (dissolved in water 1:20 at 70 °C). Dyes were fixed with dilute formic acid added over 60 min. Top dyeing was carried out in a new bath always with the prior addition of the colour dispersing agent (0.2%) as above and the necessary quantities of dyestuffs. The drum run for a total of 15 min and a second fixation was executed with dilute formic acid (0.2%). Finally when required top fatliquoring was implemented in a new bath and leathers were washed, drained, horsed up and the next day set-out and hanged free to air-dry at ambient temperature. Dry leathers were conditioned, staked, toggled dry and finally finished with a semi-aniline system.

The same crusting process, but this time starting from the second anionic retanning, was successfully applied on the «all-in-one» leathers, SDAS-tanned, and processed without intermediate drying to dyed crust.

### Example 9 : Retanning and fatliquoring of "solo-SDAS" tanned wet-white for the production of metal-free zero-formaldehyde content white crust leathers (No. 1014 - Reference number EA132C)

Tanned leathers as per example 3, pressed and shaved to 1.5 and 2.0 mm were immersed in a new bath (50-80% w/shaved weight, 30°C) and retanned first with a selected condensation polymeric phenolic product (10% w/shaved weight, Tanigan OS, BAYER, 56% active substance, pH=3-4, methylene-bonded condensates of aryl-sulphonic acids, sodium salt and hydroxy-aryl-sulphones) in powder form - offer 5% w/shaved weight). The drum run for at least 40 min and then a selected liquid syntan (10% w/shaved weight, NUBUCTAN SB, SEICI, condensation product of di-hydroxy-diphenyl sulphone, pH=3.5, 40-45% active substance) administered in two equal doses over 3 hours. At this point leathers were drained well and washed with water at 35 °C. If necessary a second anionic retannage was carried out in a new bath using 3% of a commercial vegetable tannin dispersing agent (BLANCOTAN SN, SILVA TEAM, synthetic condensation product of neutralised naphthalene-sulphonic acids, 27-28% tans - 21-22% non-tans, pH(1:10) =6.8-7.2). After the drum has run for 30 min a natural sulphited fatliquor was added (0.2-1% w/shaved weight, ENSUL AM90, Z&S, anionic, 90% active substance) the drum was run for 15 min and then 8% of a vegetable tannin (Tara Pods, VANDOTAN T, VANDONI) was administered in two doses over 90 min. The bath was well exhausted. In order to optimise bath exhaustion even further 0.5% of dilute formic acid (1:10) were administered over 20 min, to a final pH=3.8. Leathers were drained and cleared as per example 7, and washed, but this time were deacidified with potassium acetate solution to a pH=4.8. The neutralisation reaction duration can vary from 60 min to 12 hours (overnight if necessary) depending on the degree of penetration of anionic dyes required. Leathers were drained and washed twice with water at 40 °C. Dyeing was then carried out with anionic dyestuffs (0.5-1 %) in a new bath (300% water at 50°C) after the leathers were drummed for 5 min with a dye dispersing agent (0.2% w/w, SINCAL ZA). Dyestuff was fixed with dilute formic acid over 60 min and then the top-dyeing and fatliquoring operations required were carried out in new baths. Dyed leathers were processed to crust and finished state as per example 8.

The same crusting process, but this time starting from the second anionic retanning, was successfully applied on the "all-in-one" leathers, SDAS-tanned, and processed without intermediate drying to dyed crust.

### Example 10 : Dry Fatliquoring and Dyeing of "all-in-one" metal-free zero-formaldehyde content white crust vachette type leathers (No. 1004 /1005, Reference number EA 129)

White crust full substance leathers tanned as per example 4 were pressed and if required, shaved at 3-4.5 mm; these were dry fatliquored as for full vegetable tanned vachette heavy leathers with natural oils and dyed in different colours. Leathers were finished easily in milled grain and smooth grained finished articles for leathergoods just by varying the mechanical operations.

### Example 11 : Organic stabilisation (pretanning) process of rawhides and skins - Preparation for sorting, intermediate stocking, transport and tanning using SDAS

Commercially degreased pickled Greek lamb pelts were immersed in a short aqueous bath (80%, w/w, cold water) after cooking salt (8%) was added to reach a density of 1.058 g/cm³ (8°Be). At this point was administered 5-10% of a commercial condensation product of di-sulphones and modified aliphatic aldehydes (Ledosol XT, SILVATEAM, No. CAS: 111-30-8, anionic, 47%±1 active substance, pH=4±1).

The pretanning reaction was extended and continued overnight, something never before attempted, with the drum set in automatic mode, running 2 min every 2 hours. Eventually next morning the aldehyde pretanned leathers pH was raised using various neutralising agents (1-2% offer) to a final pH =4.5 (90 min). Product stabilised wet leathers were coloured in light yellow after the aldehydic pretannage and basification, respectively, and after piling for at least two weeks were ready for sorting, stocking and further tanning /retanning using the invention oxy-polysaccharide products.

### Example 12 : Compact hybrid organic retanning and fatliquoring process of aldehyde pretanned and SDAS-tanned leathers for the production of full grain metal-free white-crust leathers (Reference number EA019)

Wet-stabilised (aldehyde pretanned) leathers produced as per example 11 were neutralised in a new aqueous bath at 40°C (150%, w/w) with the use of a commercial synthetic neutralising agent (mixture of aromatic sulphonic and di-carboxylic aliphatic acids, 3% w/w, 93% active substance, pH=7.3-8.2) to an end pH=5.5.

The drum was drained and the leathers were fatliquored in a new aqueous bath at 50°C (100%, w/w) where a commercial synthetic fatliquor is administered (dissolved in water at 50°C, 1:4, 8% w/w, 55% active substance., pH=7.0); the drum runs for 30 min and the following composition of retanning agents was added: liquid tara extract (20%, w/w), liquid Gambier extract (20%, w/w) mainly a catechol tannin. Conc: 43-53% in tannins; pH = 4.5). For pale and pastel coloured leathers it is preferable to add at this point also a commercial synthetic white syntan (di-hydroxy-di-phenyl-sulphone condensate, 20%, w/w, 40% active substance, pH=3.5).

The drum runs for 120 min. A synthetic white tanning agent was then added (4%, w/w, 57-59% tans 36-38% non-tans, pH=4.1-4.3) the drum run for another 180 min, and set in automatic o/n running for 2 min / 2h. Next morning the drum was drained, the leathers were piled for a minimum of 16 h and then set out prior to dyeing using new immersion dyeing machines and anionic or reactive dyestuffs, or in a drum applying a conventional top dyeing protocol, for this purpose.

### Example 13 : Free formaldehyde content and shrinkage temperature

The free formaldehyde content and the shrinkage temperature of leathers obtained in the preceding examples were measured according to European standard methods CEN-17226 (HPLC) and EN-ISO 3380, respectively.
The general Legislative and Normative formaldehyde limits are as follows :

| LEATHER END USE | FORMALDEHYDE CONTENT LIMIT |
|---|---|
| All types of leathers (legislative limit) | <150ppm |
| Leather for children shoes (SG) | <50 ppm |
| Japanese Law 112 (Oeko-tex Standard) | <16 ppm (n.d) |

The results are shown in Table 3 below :

**Table 3**

| Reference No. | Example No. | Test No. | Free formaldehyde content (ppm) | Shrinkage temperature (°C) |
|---|---|---|---|---|
| EA 122 B | 5 | | 15 | 98 |
| EA129 | 3 | | ND* | 76 |
| EA129 | 10 | 1005 | 2.9 | 73 |
| EA129 | 4+6 + Finishing | 1008 | 1.7 | 71 |
| EA129 | 4+6 + Finishing | 1009 | 7.6 | 72 |
| EA132 | 3 | 1010 | 1.5 | 72 |
| EA 132C / EA129 | 8 | 1013 | 3.1 | 76 |
| EA132C | 9 | 1014 | 3.0 | 102** |
| EVERCALF VEALSKIN | Commercial Cr-tanned Leather | | 26.9 | 104.5 |
| CLEMENCE BULLSCALF | Commercial Cr-tanned Leather | | 5.2 | 105 |

| | | | | |
|---|---|---|---|---|
| *ND = not detectable ** Slight sample contraction observed at lower temperatures but abrupt shrinking at 102 °C | | | | |

The results show that all the tested samples fulfil the formaldehyde content requirements, and the formaldehyde content is below 15 ppm for all samples.

In particular, free or hydrolysed monomeric formaldehyde content measured with HPLC in leathers tanned or retanned with the invention formulation of SDAS and according to the invention methods, ranged consistently from the never before attained for organic tanned leathers 0 ppm for "all-in-one" white crust (EA 129) to 7.6 ppm for dyed and finished leathers, whilst 15 ppm was the highest value recorded only for high stability tanning protocol (EA122B). These values in turn meet the legislative and normative requirements and are by far the lowest obtained so far content values measured for organic and reference commercial Cr(III)-tanned leathers and control semi-chrome tanned leathers.

### Example 14 : Restricted substances content

The chlorophenols content of leathers obtained in the preceding examples were measured according to European standard methods for main restricted substances.

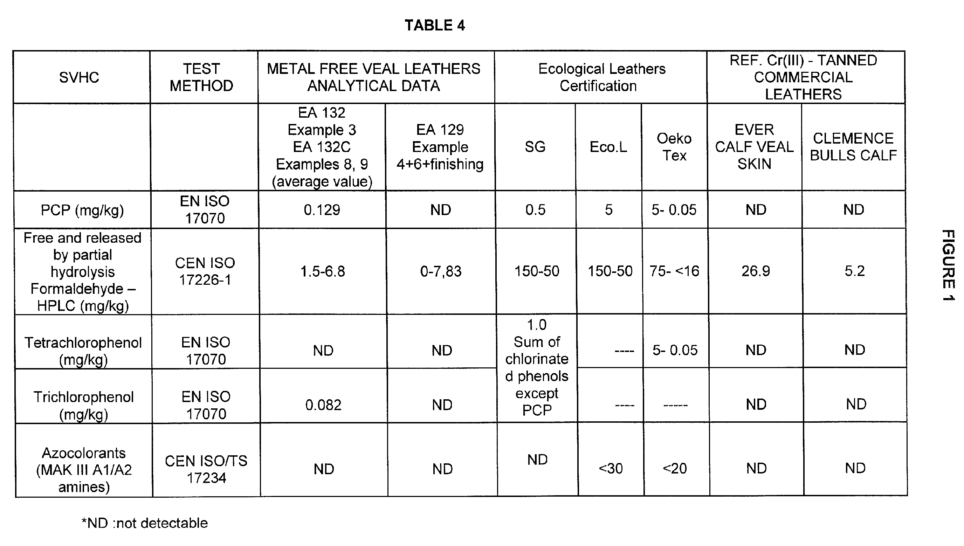

The results are shown in table 4 on Figure 1.

The results show that all the tested samples fulfil the requirements for main restricted substance, which are not detectable for all samples.

### Example 15 : Physicochemical tests

Test of thickness, tearing force, tensile strength, Elongation at break, tear load, flexing endurance, light fastness and finish adhesion were carried out lengthwise (L) and crosswise (C) on leathers obtained in the preceding examples were measured according to European ISO standards.

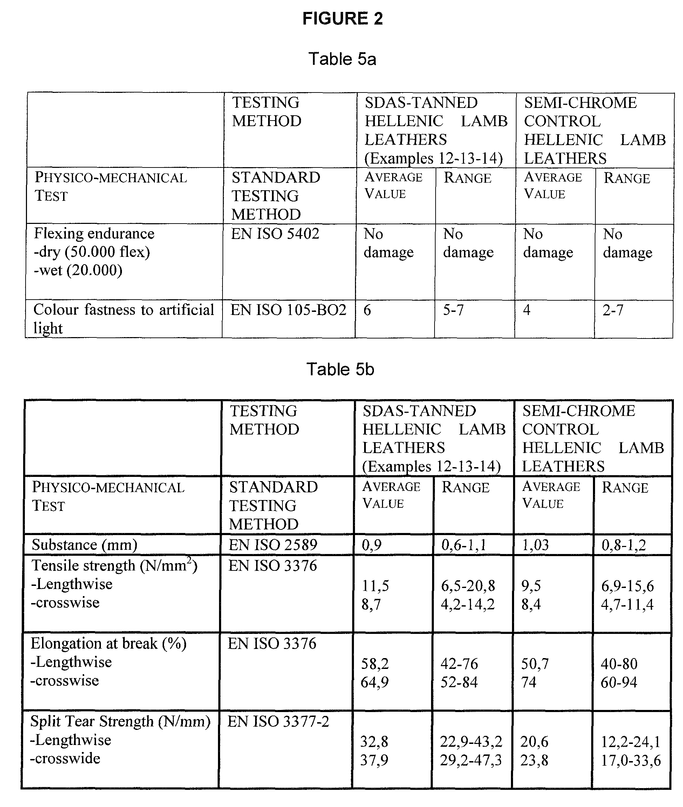

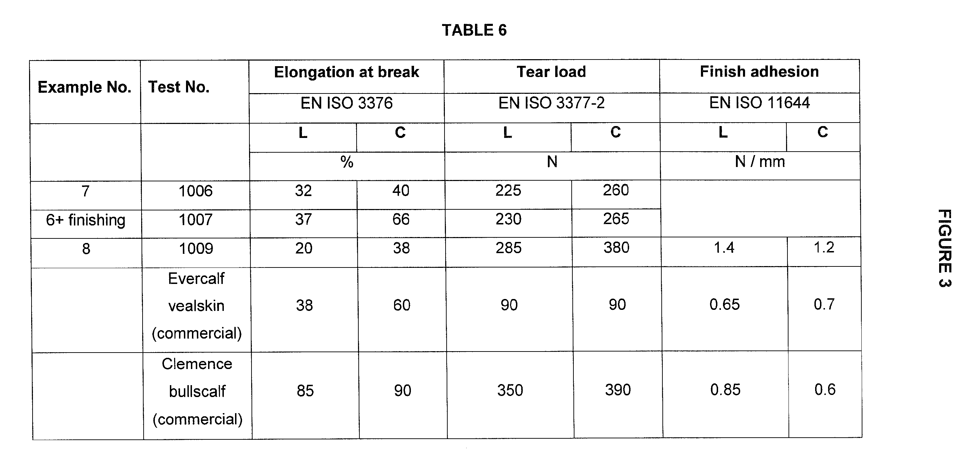

The results are shown in tables 5a and 5b on Figure 2 and Table 6 on Figure 3.

The results regarding flexing endurance (Table 5a) show excellent results, comparable to those of the semi-chromium tanned reference leathers.

The results on Table 5b show that there is clear improvement of tensile strength of SDAS-tanned samples with similar thickness, whereas the tear strength values are comparable to those recorded for reference leathers.

The measured colour light fastness (Table 5b) for the SDAS tanned lambskins is rated at 6-7 in the grey scale, which is by far superior to any full vegetable tanned or organic tanned leathers and comparable, if not better than most commercial aniline and semi-aniline chromium-tanned leathers.

### Example 16: Metal contents

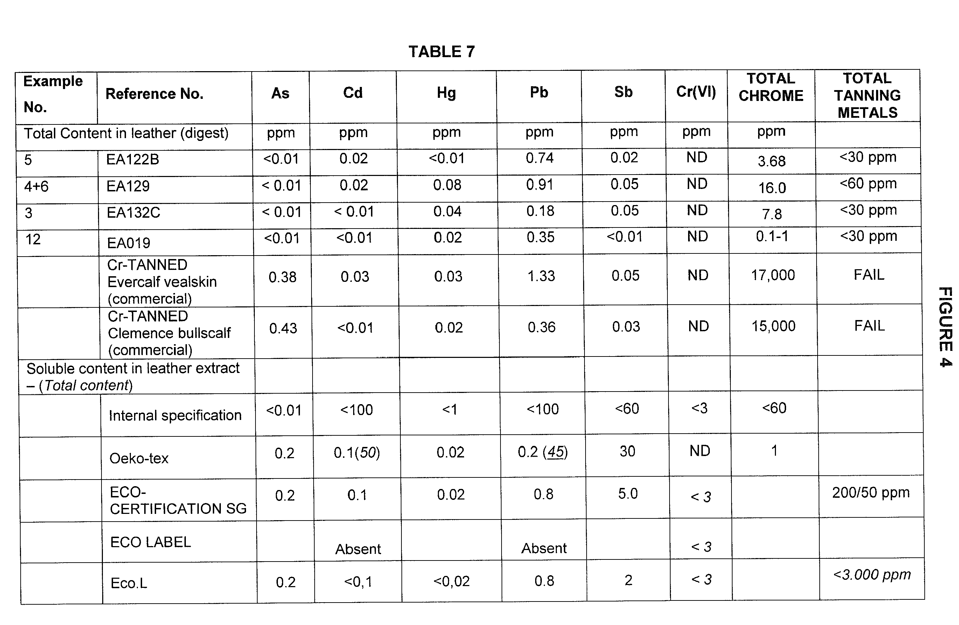

The metal contents determined in leather digests obtained in the preceding examples were measured according to European standards EN ISO17072 of 2011 1/2. The results are shown in table 7 on Figure 4.

The results show full conformity with legal and normative requisites for the absence or restricted content of potentially toxic and heavy metals as Hg, Pb, Cd, Cr(VI) - despite the fact that determinations were carried out in the digest of leathers and not in the extract (soluble part only) - as well as As in leathers tanned according to the invention, while in commercial samples, the total metal content values in digest quite often fail the legal or/and ecocertification requirements.

The total content of metals in the digests of the samples according to the invention is less than 30 ppm.

### Example 17 : Artificial Ageing Comparative Results for SDAS-, Semi-Chrome Control and Commercial Cr (III) - tanned leathers

Testing device and regime have so far been used only for archival bookbinding and restoration leathers evaluation, a development co-financed by the EU for over a decade, but until now not taken up by the Industry *(*Roy S. Thomson, International Council of Museums (ICOM), Working Group "Leather and Related Materials" - Groupe de Travail "Cuir et Matériaux Associés" - 21-24 April 2004, Byzantine & Christian Museum, Athens*)* and can be summarized as follows: Standard samples were loaded into the chamber for a 12 week ageing period. The chamber was run in accordance with the standardized ageing parameters: Temperature: 40±1°C, RH: 30±2%, SO₂: 40±2 ppm, NO₂: 20±2 ppm.

The chamber was stopped at week 4 and week 8 to remove portions of each sample for analytical purposes. Ageing continued to meet the 12 week ageing period. The samples obtained according to example 12 were tested for their shrinkage temperature (EN ISO 3380) and resistance to continuous flexing (EN ISO 5402) after 4, 8 and 12 weeks of artificial ageing in the aforementioned unique chamber and the results obtained are shown in Tables 8 and 9.

**Table 8**

| Time in Ageing Chamber | SDAS-tanned leathers of example 12 | | | Semi-Chrome tanned Control leathers | | |
|---|---|---|---|---|---|---|
| | Ts (°C) | ΔTs (°C) | Flex Damage | Ts (°C) | ΔTs (°C) | Flex Damage |
| 0 | 83-87 | 0 | n.d | 129 | 0 | n.d |
| 4 weeks | 67-77 | -9 to -16 | n.d | | | |
| 8 weeks | 60-72 | -14 to -23 | n.d | 82 | -47 | n.d |
| 12 weeks | 55-63 | -19 to -28 (-21,8 to -33,8%) | n.d | 68 | -61 (-47,2%) | n.d |

**Table 9**

| Time in Ageing Chamber | Chrome tanned reference leathers -Oil finished | |
|---|---|---|
| | ΔTs (°C) | Flex Damage |
| 0 | 0 | n.d |
| 4 weeks | -13 | n.d |
| 8 weeks | -33 | Cracked at 50-cycles |
| 12 weeks | -37 (-39%) | Cracked at 0 cycle |

The results show that SDAS-tanned samples have demonstrated superior resistance to ageing under the conditions applied, whereas semi-chrome, full vegetable and chrome-tanned reference and commercial leathers collapse after 4 or eight weeks in the chamber.

### Example 18: Solo- SDAS metal- and formaldehyde-free tanning of pickled French Calf pelts (8-to-12 kgs mean wet salted weight) (Reference number HA 132)

### a) Preparation of oil-impregnated pelts

Oil-impregnation of pickled - preferably partially dehydrated by wringing prior to this fibre oiling step - pelts produced as in Example 2, but with the replacement of the mix synthetic emulsifiers mixture with anionic sulphated castor oil Type B (resistant to electrolytes, active substance. content 44%± 2%.

French pickled calf pelts were wringed and after assessing level of mechanical dehydration immersed in salt slurry (approximately 18 I of water at ambient temperature, 10-15% w/w sodium chloride offer, Density: 1.06 g/cm³ (8.5°Be)). The effective dehydrated pickled pelt weight was calculated after implementing a correction of actual weight reduction by 25% (Effective Pickled Pelt weight: 13 kg), as pelts contained 50-60% humidity.

Bath length was dictated by pilot drum recycling unit capacity and reached 150% of effective pickled pelt weight when on original recipes and lots of 100kg veal pelts previously conducted the baths used were significantly shorter (50-80%).

Temperature in the bath as measured by drum real time sensors was equal to 20-23 °C. Start pH of test was approximately 3.

The absorption of the sulphated castor oil (8% w/w offer) was fast and complete after only 30 min.

### b) Tanning

SDAS as prepared in example 1 was administered 10-to-30% w/w (preferably 20%, in two equal doses of 10% each) (pH=2.3-2.5, 43% dry substance.) over 2 hours.

SDAS was absorbed fast from the bath and this concomitantly enabled the addition of the 2nd dose of SDAS after only 45 minutes. pH measured for a tanning bath aliquot ranged from 2.8 to 3.2 after each addition, respectively. SDAS pH is equal to 2.3.

Samples of wet white pelt were taken and the penetration of SDAS assessed (on dry specimens) using a tailored-made fuchsine-sulfurous acid bi-component indicator (H. Schiff, Ann. 140, 93, 1866) prepared and tested positively by the inventors. Full penetration in various topographic locations on the same pelt was confirmed.

Sodium hyposulphite crystals (10-to-40%, preferably 20% w/w in total) were then added in two equal doses, allowing 30-45 min after each administration the drum to run. pH of the exhaust liquor after last addition was equal to 3.3-to-3.4 (assessed with litmus test) and the bath was well exhausted.

The last step was the basification of the pelts using for this purpose 1-4% w/w (preferably 2% w/w) aqueous solution of potassium acetate (active substance. content 40 ± 2 %, pH= 6,8 ± 0,2) solution dissolved in 2 l of tap water and added in 2-4 doses over 60 minutes. The end pH ranged from 3.7-to-3.8. Exhaust bath was clear seemed very well exhausted.

Wet white leathers were horsed up for 3-days and appeared smooth grained, relatively flat and compact with no evident greasy surface handle. These were processed mechanically, retanned, dyed and finished as routinely applied for commercial leather type leathers at tannery. Samples of semi-processed (dry-white and stained) as well as semi-finished leathers were taken and tested.

### Example 19 : Solo- SDAS - all vegetable - metal- and formaldehyde-free tanning of pickled French Calf pelts (Reference number HA 150)

### a) Preparation of oil-impregnated pelts

Heavy pickled calf pelts were wringed (wringed weight = 18 kg) prior to the fibre-oiling step, applied as in example 23. Again a correction of the wringed weight to the effective dehydrated pickled pelt weight was executed (-20%), which, in turn, was equal to 15 kg.

For the tests a narrow inox drum at a rotation velocity ranging from 3-4 rpm. was employed. The salt-slurry bath length was 20 l and the density of the bath, as measured in an aliquot sampled as routinely done in Tannery after running the drum for 5 minutes, was equal to 1.06 g/cm³ (8,5 °Be).

2-to-8% w/w (preferably 8% w/w or 1,6 kg) of sulphated Castor oil resistant to electrolytes was administered and run for 30 min until as macroscopically assessed was fully exhausted and pelts felt rather "greasefree" on their surface. The pH after the completion of the impregnation step was equal to 3.5.

### b) Tanning

At this point 2-to-10% (preferably 5%) of industrial grade or pure alimentation grade maize starch was added (powder, raw material for SDAS manufacture) and appeared as a dense suspension in the bath; the industrial grade product consequently was not finely milled and dissolved less efficiently than a pure alimentation grade starch.

The filler was allowed to run for approximately 90 min prior to the addition of the first dose of SDAS of example 1 (pH=2,3-2,5, 43% d.s.), namely 10 to 40% (preferably 20%) w/w total offer, administered in 2 parts, every thirty minutes, and the tanning reaction carried on by at least another 120 min, aiming at the maximisation of tanning bath exhaustion.

The tanning bath pH after the completion of the tanning reaction was equal to 3.3-3.4, prior to basification; the latter operation was carried out using once more potassium acetate solution 1-to-4% w/w (preferably 2% w/w), administered over 90 minutes in two equal doses of 1% each. End pH was equal to 3.7- 3.8, preferably 3.8. Bath supernatant was taken for analysis of COD (dissolved organic carbon) concentration (40.000 ppm) and charge (0,033 kg COD/kg pelt). Wet-white was full, smooth grained, compact and soft.

Wet white pelts were drained and horsed up for 3-days; these, in turn, appeared full and soft, but also a little bit sticky as came out of the drum - not washed. These were processed mechanically, retanned, dyed and finished as routinely applied for commercial leather type leathers at tannery. Samples of semi-processed (dry-white and stained) as well as semi-finished leathers were taken and tested.

### Example 20: "all-in-one"- French Calf SDAS metal-free and zero-formaldehyde tanning - syntan retanning - fatliquoring (single bath hybrid compact process) - Reference number HA129

### a) Preparation of oil-impregnated pelts

Heavy pickled French calf pelts (mean weights 8-12 kg) were wringed (wringed weight 9 kg/pelt) and used for the tests. Fibre-oiling was carried out as in Example 2 with a mix of synthetic emulsifiers offered this time at a reduced offer, namely 1- 4% w/w, preferably 3,3 % w/w (500 g).

Experimental pickled pelts effective weight was equal to 7.5 kg /pelt and these immersed 150% w/w (approximately 20 l) of salt water slurry at 1.05 g:cm³ (8°Be). The drum run for 3 hours continuously at 3-4 rpm and can be either stopped for 10 hours (intermittent o/n running for 15 min / hour) or preferably the tanning process can start immediately after. The impregnation bath was slightly turbid and exhaustion of the fatliquor most satisfactory. At this point the pH was measured and was found equal to approximately 3.5.

### b) Tanning

Tanning was then carried out using SDAS produced as in Example 1, that was administered at offers ranging from 1-8% on pickled pelts' weight basis, preferably 8% w/w The drum run for 45 minutes at 3 rpm, whereas at this point the tanning bath was well exhausted, as SDAS once again markedly accelerated the uptake of residual fatliquor from the bath - and pH was equal to 3.0-to-3.1. Pelts appeared and felt really full and white.

Retanning was carried out in the same bath using selected syntans. In particular, the following sequence of additions and chemical operations was repeated 3 times: (i) Administer 2-5% w/w, preferably 3% w/w, of a condensation polymeric phenolic product in powder form (450 g, 56% active substance, pH=3-4, methylene bonded condensates of aryl-sulphonic acids, sodium salt and hydroxy-aryl-sulphones) and run the drum at 3-4 rpm for 15 minutes. (ii) Add 5-to-10% w/w, preferably 7% w/w, of a liquid syntan (1.04 kg; a condensation product of di-hydroxy-diphenyl sulphone, pH=3.5, 40-45% active substance) (1.04 kg) and run for 60 min.

After the last addition of the di-hydroxy-di-phenyl-sulphone-based white syntan the drum run for another 90 minutes; the bath pH was equal to 3.2-to-3.3.

Basification was carried out using two equal doses of potassium acetate solution (1-to-4% w/w, preferably 2%) dissolved in 1 l of water with intermittent running of the drum for 60 min after each addition. pH measured with pH-meter at the Tannery was equal to 3.54 and at the end of the reaction was equal to approximately 3.7.

Large specimens of leather were taken prior and after basification and pressed (wringed) and then vacuum pressed for 1 and 2 min respectively using in-house vacuum dryer. Samples were not completely dried, but appeared smooth grained, compact and soft, whilst no degradation or shrinking of the grain layer was observed. This clearly demonstrated that the process stabilized well leathers even before basification was executed.

Exhaust liquor was only lightly shaded yellow, whilst the tanned prototypes were white uniformly and full with a most pleasant handle. A large specimen was wringed (pressed) at the tannery and allowed to hang free air dry o/n. Dry-white was full, smooth grained, compact. Leathers appear uniformly white. Prototype tanned leathers were drained, horsed up for 2-days prior to further processing.

The metal contents were measured in digests of leather samples. The determined values correspond to the total content of each metal in the leather sample and not to only leachable or soluble metal content regulated by all eco-certification schemes and labels.

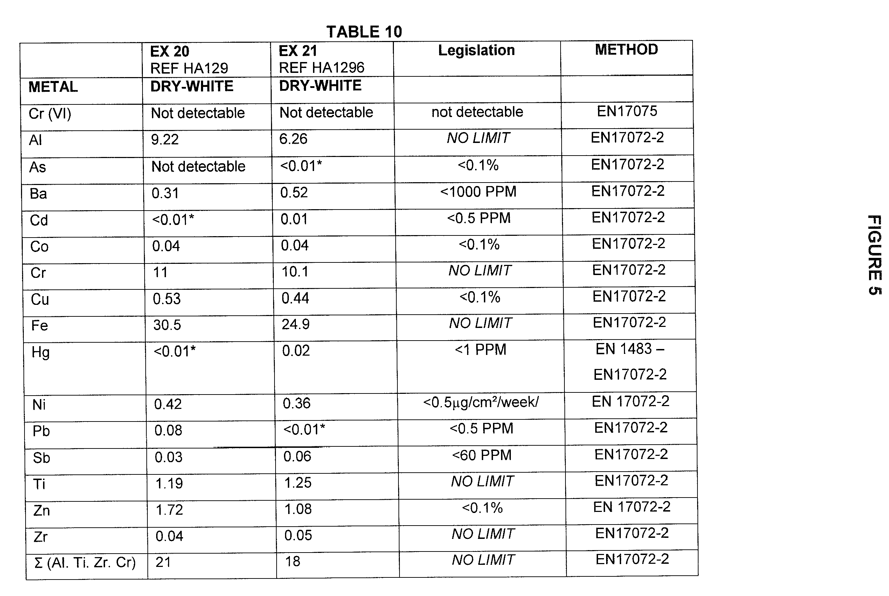

Results are reported in Table 10 on Figure 5.

The results show that the total metal content in digests of leather samples matches the expectation for soluble or leachable metals (extract). In particular, a total metal content which is less than 30 ppm can be obtained.

### Example 21: Low-waste rapid "all-in-one"- French Calf SDAS metal-free and zero formaldehyde tanning - syntan retanning - fatliquoring (single bath hybrid compact process) - Reference number HA1296

### a) Preparation of oil-impregnated pelts

Heavy pickled calf pelts were wringed (wringed weight 9 kg/pelt, effective dehydrated weight equal to 7.5 kg/pelt) and then immersed in 9-12 It of salt water slurry with a density of 1.05-1.09 g/cm³ (7-12 °Be, preferably 9°Be). Fibre oiling was then carried out as in Example 2 with a mix of synthetic emulsifiers however, at a significantly reduced offer 1.5-to-3.3% w/w, preferably 2 % w/w (150 g/pelt).

The drum run for 45-to-90 min continuously at 3-4 rpm, preferably for 60 min. The impregnation bath was only slightly turbid and exhaustion of emulsifier based fatliquor most satisfactory. At this point the pH was measured and was found equal to 3.9.

### b) Tanning

Tanning was then carried out using SDAS, produced as in Example 1, that was administered at offers ranging from 2-to-6% on pickled pelts' weight basis, preferably 6% w/w (450 g/ pelt), administered all at once. The drum run for 45 min at 3 rpm, whereas at this point the tanning bath was well exhausted, as SDAS once again markedly accelerated the uptake of residual fatliquor from the bath - and pH was equal to 2.8. Pelts appeared and felt really full and white.

Retanning was carried out in the same bath using with the following sequence of additions and chemical operations repeated 2 times: (i) Administer 3% w/w (225g/pelt) of a condensation polymeric phenolic product in powder form (56% active substance, pH=3-4, methylene bonded condensates of aryi-sulphonic acids, sodium salt and hydroxy-aryl-sulphones), mixed with 0,2% w/w (15 g/pelt) of EDTA (metal sequestering agent) and run the drum at 3-to-4 r.p.m for 30 minutes - pH=3,1 and bath temperature was 20 C (ii) Add 7% w/w, 1050g / pelt, of a liquid syntan (a condensation product of di-hydroxy-diphenyl sulphone, pH=3.5, 40-45% active substance), diluted in water (1:1) and run for 60 minutes - pH=3.2.

After the last addition of di-hydroxy-di-phenylsulphone-based white syntan the bath temperature was equal to 25°C and the pH=3.

Basification was carried out using four doses of potassium acetate solution (2.7% w/w) dissolved in water (1:15) added every 30 min. End pH measured with pH-meter at the Tannery was equal to 3.7. Total process duration shortened down to 6 hours.

Prototype leathers were horsed up for 16-40 hours, whereas mechanical and drying processing tannery operations were tailored, using production apparatus and machinery and their combinations not applied hitherto to wet white or wet blue commercial production. Wet white resisted and successfully performed during sammying, vacuum pressing, splitting and shaving wet.

The metal contents were measured in digests of leather samples. The determined values correspond to the total content of each metal in the leather sample and not to only leachable or soluble metal content regulated by all eco-certification schemes and labels.

Results are reported in Table 10 on Figure 5.

The results show that the total metal content in digests of leather samples matches the expectation for soluble or leachable metals (extract). In particular, a total metal content which is less than 30 ppm can be obtained.

### Example 22 : Quality testing comparative results for SDAS-tanned leathers and Cr(III) reference veal commercial leathers

Tensile strength, elongation at break, split tear strength and flexing endurance were tested according to ISO standards for tanned leathers according to examples 3 (ref EA132C - solo process) and example 4 (ref EA129- all-in-one process).

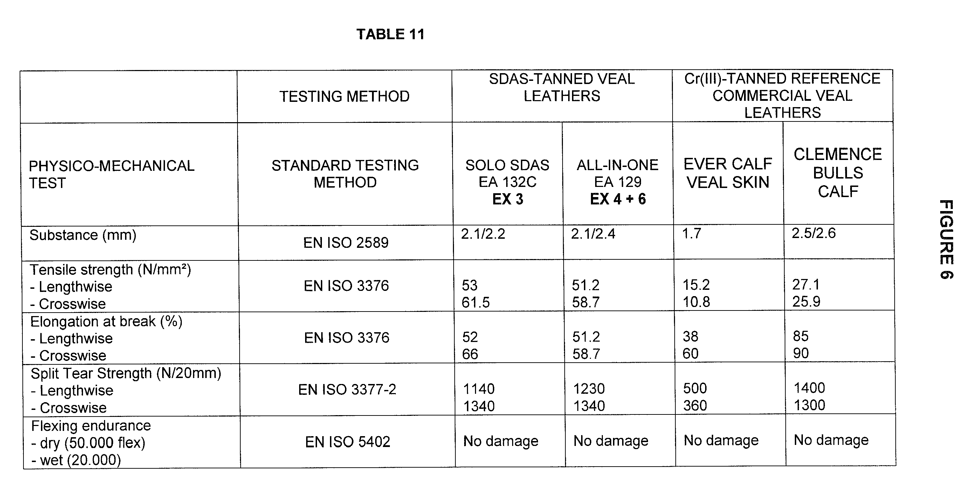

The results are shown in table 11 on Figure 6.

The results show that SDAS-tanned leathers according to the invention match the quality recommended values of ENISO standards and eco-certification labels for commercial products.

### Example 23: Physicochemical properties for SDAS-tanned leathers of examples 18, 19, 20 and 21

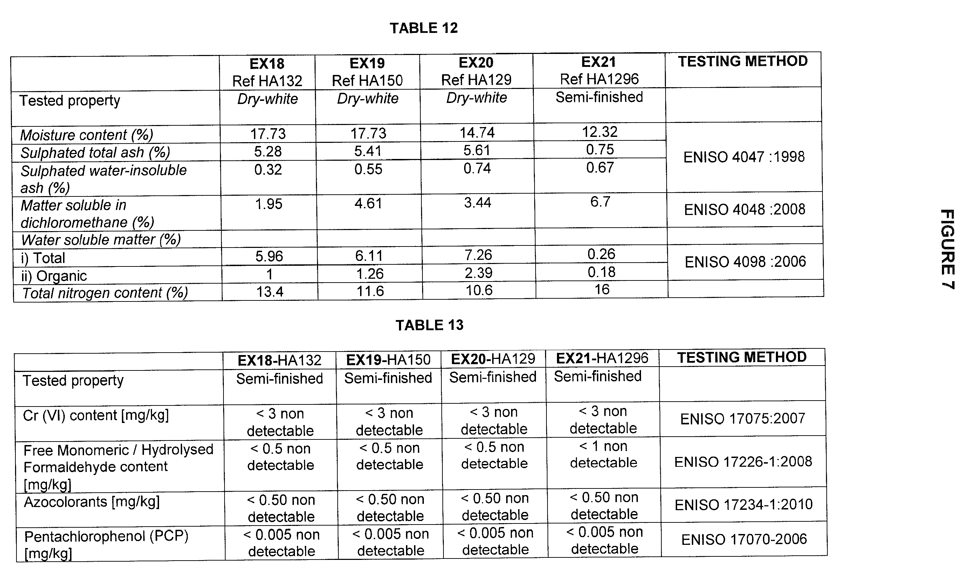

Physicochemical properties (table 12) and measurements of restricted substances contents (table 13) are shown on Figure 7.

SDAS-tanned leathers according to the invention fully fulfil the legal requirements according to ISO/ENISO standards.

### Example 24 : Preparation of lyophilized SDAS

The SDAS composition of example 1 was freeze-dried using the Delta- 2-24 LSC Christ (Germany) freeze-dryer. The SDAS composition was cast in polystyrene Petri dishes of 3cm of diameter at 20°C. They were frozen at 0, -10, -20, -30 and -40°C, and kept at this temperature for 3 hours, then submitted to a primary drying at -40°C for 10 hours under a pressure of 0.1 mbar and to a secondary drying from the 13^{th} hour to the 36 ^{th} hour with gradual rise of temperature (3°C/min) to a final temperature of 35°C, the final pressure being 0.01 mbar.

The ATR FT-IR spectrum was recorded on a Jasco FT/IR-4200 spectrophotometer, using 30 acquisitions for each sample with a resolution of 4 cm⁻¹, at a spectral range of 510-4000 cm-¹.

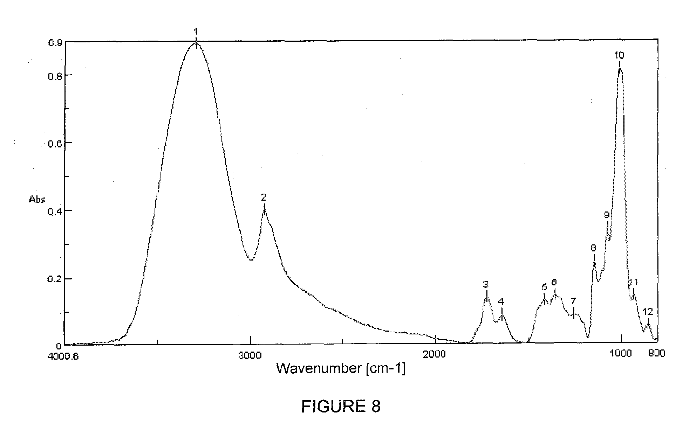

The FT-IR spectrum is shown on Figure 8, with the following peaks:

| No | Position | Intensity |
|---|---|---|
| 1 | 3295.44 | 0.891333 |
| 2 | 2924.21 | 0.398367 |
| 3 | 1724.7 | 0.137463 |
| 4 | 1643.7 | 0.849469 |
| 5 | 1414.22 | 0.130181 |
| 6 | 1361.18 | 0.143312 |
| 7 | 1257.05 | 0.085716 |
| 8 | 1146.16 | 0.241788 |
| 9 | 1074.81 | 0.341685 |
| 10 | 1010.20 | 0.815111 |
| 11 | 930.171 | 0.143969 |
| 12 | 853.997 | 0.054274 |

Tentative assignment of the peaks shows the presence of dialdehyde groups at 1724.7 cm⁻¹ and hydroxyl groups (OH or COOH) at 1010.20 cm⁻¹. The broad peak at 3295.4 cm⁻¹ indicates the hydrogen bonding H-H.

### Example 25 : Crosslinking activity of lyophilized SDAS towards collagen

Type I collagen of bovine origin was crosslinked with the SDAS product of example 1.

The collagen Type I gel was obtained in gel state from bovine hides and prepared as described in Albu M. G., 2011, Collagen gels and matrices for biomedical applications" LAP LAMBERT Academic Publishing GmbH & Co. KG, Saarbrücken, Germany.

The collagen gel (Coll) with an initial concentration in collagen of 1.99% and pH 2.6 was adjusted at 1% collagen and at pH 4.5. Normalised gels were cross-linked with 1 wt% of SDAS.

Native collagen and crosslinked collagen samples were cast in Petri dishes (5 cm diameter) and freeze-dried with a Martin Christ Model Delta 2-24 KD lyophilizer. Freeze drying was performed by frozing at 0, -10, -20, -30 and -40°C and the Petri dishes were kept at this temperature for 4 h, then were heated with 1 °C/hour (40h) at 0.12 mbar and then heated (4h) to 30°C at 0.01 mbar.

ATR FT-IR spectra of the crosslinked collagen, in comparison to native collagen, were recorded as indicated in example 24.

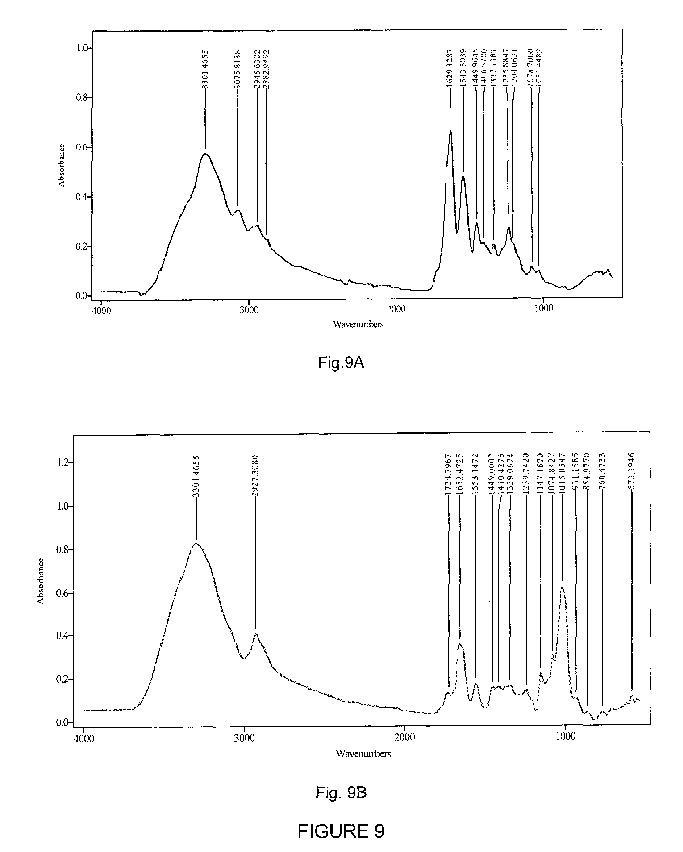

The FT-IR spectra are shown on Figure 9, where the spectrum of native collagen is shown on Figure 9A and that of SDAS-crosslinked collagen is shown on Fig.9B.

On Figure 9B, the spectrum shows a broadening of the peaks, in particular at 1724 and 1014 cm⁻¹, in comparison to those shown on the spectrum on Figure 8. This broadening results from the interaction of SDAS with the collagen matrix, while no denaturation is observed.

## Claims

1. A leather manufacturing process comprising at least one step where pelts are treated with a composition containing a soluble oxidized starch-derived polysaccharide comprising units of formula (I) 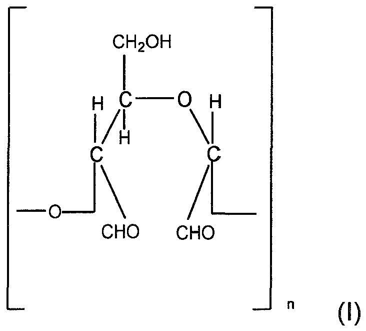 wherein n=1 to 10000
and water,
wherein said soluble oxidized starch-derived polysaccharide comprises approximately 50 to 70%, preferably 60 to 70% by weight of units of formula (I) in which n=2 to 18, having molecular weights ranging from approximately 350 Da to 3300 Da.

2. A leather manufacturing process according to claim 1, **characterized in that** the average molecular weight of the soluble oxidized starch-derived polysaccharide of formula (I) is approximately 8000 to 9000 Da, preferably 8200 Da.

3. A leather manufacturing process according to claim 1 or 2, **characterized in that** the aldehydic reactivity of the soluble oxidized starch-derived polysaccharide of formula (I) in the composition is approximately 2 to 4.10⁻²M/kg.

4. A leather manufacturing process according to any one of claims 1 to 3, **characterized in that** the dry substance content of oxidized starch-derived polysaccharide comprising units of formula (I) in the composition is approximately 40 to 50 weight %.

5. A leather manufacturing process according to any one of claims 1 to 5, **characterized in that** the composition has a final pH of 2.3 to 2.7, preferably 2.5.

6. A leather manufacturing process according to any one of claims 1 to 5, **characterized in that** the composition has a final pH of 3.5 to 10.0.

7. A leather manufacturing process according to any one of claims 1 to 7, **characterized in that** the composition containing the oxidized starch-derived polysaccharide of formula (I) and water is used alone or in combination with other tanning or re-tanning fatliquoring agents.

8. A leather manufacturing process according to any one of claims 1 to 7, comprising the steps of :
- oil-impregnating the pelts and/or treating the pelts with a synthetic organic pre-tanning agent,
- providing a composition containing a soluble oxidized starch-derived polysaccharide comprising units of formula (I) and water as tanning agent,
- optionally, retanning in the same bath with synthetic tanning agents, or in a new bath with a composition containing a soluble oxidized starch-derived polysaccharide of formula (I) and water, and/or with synthetic tanning agents, and/or with natural tanning agents.

9. A leather manufacturing process according to any one of claims 1 to 8, **characterized in that** the offer of the composition containing a soluble oxidized starch-derived polysaccharide comprising units of formula (I) and water as tanning agent is from 2 to 40 % by weight of pickled pelts.

10. A composition containing a soluble oxidized starch-derived polysaccharide comprising units of formula (I) 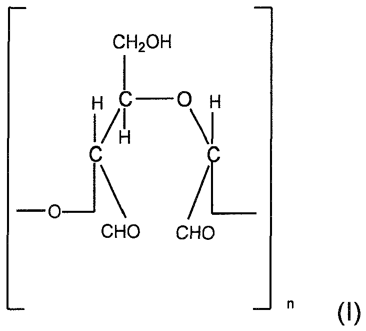 wherein n=1 to 10000
and water,
wherein said soluble oxidized starch-derived polysaccharide comprises approximately 50 to 70%, preferably 60 to 70% by weight of units of formula (I) in which n=2 to 18, having molecular weights ranging from approximately 350 Da to 3300 Da.

11. A composition according to claim 10, **characterized in that** the average molecular weight of the soluble oxidized starch-derived polysaccharide of formula (I) is approximately 8000 to 9000 Da, preferably 8200 Da.

12. A composition according to claim 10 or 11, **characterized in that** the aldehydic reactivity of the soluble oxidized starch-derived polysaccharide of formula (I) is approximately 2 to 4.10⁻²M/kg.

13. A composition according to any one of claims 10 to 12, **characterized in that** the dry substance content of oxidized starch-derived polysaccharide comprising units of formula (I) in the composition is approximately 40 to 50 weight %.

14. A composition according to any one of claims 10 to 13 **characterized in that** the composition has a final pH of 2.3 to 2.7, preferably 2.5.

15. A composition according to any one of claims 10 to 13, **characterized in that** the composition has a final pH of 3.5 to 10.0.

16. A soluble oxidized starch-derived polysaccharide comprising units of formula (I) 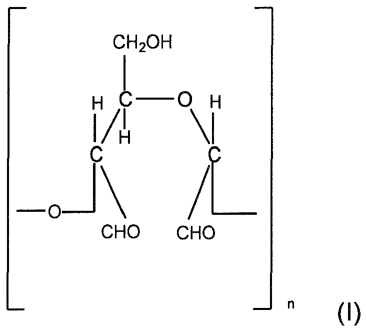 wherein n=1 to 10000
and water,
**characterized in that** said soluble oxidized starch-derived polysaccharide comprises approximately 50 to 70%, preferably 60 to 70% by weight of units of formula (I) in which n=2 to 18, having molecular weights ranging from approximately 350 Da to 3300 Da.

17. A soluble oxidized starch-derived polysaccharide according to claim 16, **characterized in that** it has an average molecular weight is approximately 8000 to 9000 Da, preferably 8200 Da.

18. A process for preparing an oxidized starch-derived polysaccharide composition according to any one of claims 10 to 15, comprising the steps of:
- submitting a suspension of starch in water to homogenization,
- adding an oxidizing agent,
- heating the reaction mixture to a temperature of 95°C to boiling temperature,
- monitoring the start of an exothermic reaction,
- adjusting the temperature so that the exothermic reaction continues until completion of oxidation, and
- cooling the reaction in order to stop the oxidation, and
- optionally, adjusting the pH.

19. The process according to claim 18, **characterized in that** the oxidizing agent is hydrogen peroxide.

20. The process according to one of claims 18 or 19, **characterized in that** it comprises at least one of the following conditions:
- the weight ratio of water/starch is 1.3 to 1.5/1 expressed in parts per weight,
- the reaction mixture comprise, expressed in weight %, 20% of hydrogen peroxide, 30% of starch, and 50% of water.
- the reaction mixture is heated to a temperature of 100 °C,
- the oxidation reaction is monitored by the development of an exothermic reaction,
- the ratio of hydrogen peroxide / starch is of 1.1 to 1.3 /1, expressed in meq.

21. An oxidized starch-derived polysaccharide composition obtainable by the process according to any one of claims 18 to 20.
